# EUROPEAN PATENT SPECIFICATION

(11) **EP 4 012 989 B1**
(45) Date of publication and mention of the grant of the patent: **06.08.2025**
(21) Application number: 20859084.4
(22) Date of filing: 22.08.2020
(51) Int. Cl.: H04L 45/655, H04L 12/46, H04L 45/302, H04L 47/80, H04L 47/2475

(54) **METHOD AND DEVICE FOR SERVICE PACKET TRANSMISSION**
VERFAHREN UND VORRICHTUNG ZUR ÜBERTRAGUNG VON DIENSTPAKETEN
PROCÉDÉ ET DISPOSITIF DE TRANSMISSION DE PAQUETS DE SERVICE

(30) Priority: 27.08.2019 CN 201910797461
(43) Date of publication of application: 15.06.2022
(73) Proprietor: Huawei Technologies Co., Ltd., Shenzhen, Guangdong 518129 (CN)
(72) Inventor: GENG, Xuesong, Shenzhen, Guangdong 518129 (CN); CHEN, Guoyi, Shenzhen, Guangdong 518129 (CN); PENG, Shuping, Shenzhen, Guangdong 518129 (CN); DONG, Jie, Shenzhen, Guangdong 518129 (CN)
(74) Representative: Goddar, Heinz J.
(86) International application number: PCT/CN2020/110660
(87) International publication number: WO 2021/036962

(56) References cited:
- EP-A1- 3 751 799
- CN-A- 102 088 413
- CN-A- 103 118 083
- CN-A- 106 209 620
- CN-A- 108 512 758
- CN-A- 109 863 725
- US-A1- 2015 117 203
- US-A1- 2015 249 591
- US-A1- 2018 062 986

## Description

This application claims priority to Chinese Application No. 201910797461.9, filed on August 27, 2019 and entitled "SERVICE PACKET TRANSMISSION METHOD AND DEVICE".

### TECHNICAL FIELD

This application relates to the field of communication technologies, and specifically, to a service packet transmission method and a device.

### BACKGROUND

Segment routing (segment routing, SR) is a source routing technology. A controller in an SR routing network may configure a segment routing policy (SR Policy), and the controller sends the segment routing policy to an ingress node on a transmission path used to transmit a service packet. In this way, the ingress node on the transmission path may select a forwarding path for the service packet according to the segment routing policy.

There may be a plurality of forwarding paths available for selection by the ingress node. When selecting a forwarding path, the ingress node needs to determine a correspondence between each forwarding path and a service level agreement (service level agreement, SLA) based on an indication value (color) in the segment routing policy. Generally, the color indicates only broad concepts such as a high bandwidth and a low latency. In this case, an accurate forwarding path cannot be selected.

US 2015/249591 A1 discloses methods and systems for enabling centralized path definition and policy with distributed path setup, and centralized path setup control with distributed path utilization constraints. In one example, a path computation client (PCC) requests, utilizing opaque PCE profile identifiers, a path computation from a path computation element (PCE). The PCE profile identifier corresponds to path computation constraints, stored local to PCE, and are unknown to the PCC. Advantageously, the PCE profile identifiers allow the PCC to initiate path computation requests based on information local the PCC while leveraging centralized path computation by the PCE. In another example, a PCE requests, utilizing opaque PCC profile identifiers, that a PCC initiate a path. The PCC profile identifier corresponds to path usage parameter constraints, stored local to PCC, and are unknown to the PCE. Advantageously, the PCC identifiers allow the PCE to marshal path initiation while leveraging distributed resources to enforce compliance with usage parameters.

CN 108512758 A discloses: The embodiment of the disclosure discloses a message processing method, a controller and a forwarding device for improving the flexibility of message processing. The method disclosed by the embodimentof the disclosure comprises the following steps: the controller obtains service information, and determines at least one forwarding device according to the service information; the controller generatesan instruction list according to the service information and the network function information of the at least one forwarding device, wherein the network function information is used for indicating network functions of the at least one forwarding device, and the instruction list comprises a control instruction generated by the controller for the at least one forwarding device; and the controller sends the corresponding control instruction in the instruction list to the at least one forwarding device, wherein the control instruction is used for indicating the at least one forwarding device to perform corresponding processing on a service message of the service corresponding to the service information.

### SUMMARY

The present invention is defined by the appended set of claims. Preferred embodiments are defined by the dependent claims. Embodiments of this application provide a service packet transmission method, which can provide attributes of a path and a quantitative value corresponding to each attribute. In this way, an appropriate path that meets a traffic requirement can be accurately selected. The embodiments of this application further provide a corresponding device and system.

A first aspect of this application provides a service packet transmission method. The method is applied to a communication network. The communication network includes a control device, a first forwarding device, and a second forwarding device. There are at least two transmission paths between the first forwarding device and the second forwarding device. The first forwarding device is a start forwarding device on the transmission path. The method is performed by the first forwarding device. In the method, the first forwarding device receieves a segment routing policy comprising respective attribute information of the at least two transmission paths from the control device, wherein the attribute information of each of the at least two transmission paths comprises an attribute used to indicate a transmission capability of the transmission path, and a quantitative value corresponding to the attribute. Further, the first forwarding device receives a service packet. The first forwarding device obtains traffic requirement information, where the traffic requirement information includes a traffic-related attribute and an amount required for the traffic-related attribute. The first forwarding device determines, based on the traffic requirement information and the respective attribute information of the at least two transmission paths, a first transmission path that is used to transmit a service packet and that meets a traffic requirement. Then, the first forwarding device sends the service packet to the second forwarding device through the first transmission path.

In the first aspect, the control device may deliver the respective attribute information of the transmission paths according to a segment routing policy (SR Policy). The SR policy includes the attribute information of each of the transmission paths. The attribute information may include an attribute of at least one dimension and a quantitative value of the attribute of each dimension. The quantitative value may be a specific value, namely, a value of a maximum guaranteed amount of the attribute. Alternatively, the quantitative value may be a value range, which indicates a guaranteed value range for the attribute. The traffic requirement information received by the first forwarding device may also include a requirement on the transmission path for an attribute of at least one dimension and a corresponding amount required for the attribute. The amount required may be a specific value, or may be a value range. In the foregoing first aspect, when a requirement for an attribute of each dimension of a fine granularity is clear, and a quantitative value of the fine granularity provided by the transmission path is also clear, an appropriate transmission path that meets the traffic requirement can be accurately determined, which improves path selection accuracy.

In a possible implementation of the first aspect, a step that the first forwarding device obtains traffic requirement information may include: The first forwarding device obtains the traffic requirement information from the service packet.

In this possible implementation, a service packet carries traffic requirement information, so that an appropriate transmission path can be selected for a service packet of any type, which improves service packet transmission efficiency.

In a possible implementation of the first aspect, a step that the first forwarding device receives the traffic requirement information may include: The first forwarding device receives traffic requirement information of a virtual private network (virtual private network, VPN) sent by the second forwarding device, where the second forwarding device is a last forwarding device on the at least two transmission paths.

In this possible implementation, for a VPN scenario, the second forwarding device provides the first forwarding device with the traffic requirement information predetermined by the terminal device in the VPN. In this way, the first forwarding device may select an appropriate transmission path that meets a VPN service. Because a traffic requirement of the VPN is a requirement of each dimension of a fine granularity, and an attribute of a transmission path is also an attribute of each dimension of a fine granularity, an appropriate transmission path that meets the traffic requirement of VPN can be accurately determined, which improves path selection accuracy.

In a possible implementation of the first aspect, when the traffic requirement information of the VPN includes a bandwidth and an amount required for bandwidth, after the foregoing step of determining the first transmission path that meets the traffic requirement, the method may further include: The first forwarding device reserves a corresponding bandwidth resource for a VPN service packet on the first transmission path based on the amount required for the bandwidth.

In this possible implementation, for the VPN service, after the transmission path is selected, a dedicated resource needs to be reserved for the VPN service, to avoid being occupied by another service and affecting the VPN service, which ensures dedicated use of the resource for the VPN.

In a possible implementation of the first aspect, the traffic requirement information of the VPN is included in a border gateway protocol (border gateway protocol, BGP) packet.

In this possible implementation, the BGP packet may be an extended BGP packet, and the traffic requirement information of the VPN may be carried in an idle field or a newly added extended field in the BGP packet.

In a possible implementation of the first aspect, the segment routing policy may further include a guarantee type of the quantitative value corresponding to the attribute, and the guarantee type is used to indicate a trustworthiness degree of the quantitative value corresponding to the attribute. The foregoing step that the first forwarding device determines, based on the traffic requirement information and respective attribute information of the at least two transmission paths, a first transmission path that meets a traffic requirement may include: The first forwarding device determines, based on the traffic requirement information, the respective attribute information of the at least two transmission paths, and the guarantee type, the first transmission path that meets the traffic requirement.

In this possible implementation, the guarantee type of the quantitative value corresponding to each attribute refers to a trustworthiness degree of the quantitative value, and the trustworthiness degree is related to a technology for collecting the quantitative value. Quantitative values collected by using some technologies are of high accuracy. When the guarantee type is indication information of one of the technologies, the quantitative value is more reliable. Quantitative values collected by using some technologies are of low accuracy. When the guarantee type is indication information of one of the technologies, the quantitative value is less reliable. For example, for an attribute, namely, a latency, on a transmission path, a quantitative value is 10 ms. If a guarantee type is 0, it indicates that it is of low reliability that the latency on the transmission path can reach 10 ms, for example, the reliability may reach only 90%. If a guarantee type is 1, it indicates that it is of moderate reliability that the latency of the transmission path can reach 10 ms, for example, the reliability may reach 95%. If a guarantee type is 2, it indicates that it is of high reliability that the latency of the transmission path can reach 10 ms, for example, the reliability may reach 99.99%. Certainly, the guarantee types 0, 1, and 2 herein are merely examples, and there may be a plurality of representation forms of the guarantee types. This is not limited in this application.

In a possible implementation of the first aspect, the foregoing step that the first forwarding device determines, based on the traffic requirement information, the respective attribute information of the at least two transmission paths, and the guarantee type, the first transmission path that meets the traffic requirement may include: The first forwarding device determines, based on the traffic requirement information and the respective attribute information of the at least two transmission paths, at least two transmission paths that meets the traffic requirement. The first forwarding device determines, based on the guarantee type, the first transmission path from the at least two transmission paths that meet the traffic requirement, where a trustworthiness degree of a quantitative value of an attribute of the first transmission path is greater than a trustworthiness degree of a quantitative value of a remaining transmission path in the at least two transmission paths that meet the traffic requirement.

In this possible implementation, when path selection is performed, if there are a plurality of paths that meet the traffic requirement, a transmission path with the highest trustworthiness degree is preferentially selected, so that a packet transmission success rate can be improved.

In a possible implementation of the first aspect, when the traffic-related attribute includes a first attribute and a second attribute, and a priority of the first attribute is higher than a priority of the second attribute, the foregoing step that the first forwarding device determines, based on the traffic requirement information and respective attribute information of the at least two transmission paths, a first transmission path that meets a traffic requirement may include: When determining that there is no transmission path in the at least two transmission paths that meets an amount required for the first attribute and an amount required for the second attribute, the first forwarding device determines a transmission path that meets the amount required for the first attribute from the at least two transmission paths as the first transmission path.

In this possible implementation, when the traffic requirement includes attributes of at least two dimensions, if requirements for attributes of all dimensions of the transmission path cannot be met, a requirement for the attribute with the highest priority is preferentially met, so that a transmission requirement of different requirements can be met.

In a possible implementation of the first aspect, the quantitative value includes a single value or a value range, and/or the amount required includes a single value or a value range.

In this possible implementation, it should be noted that the quantitative value of the attribute of the transmission path may be an accurate value, namely, a guaranteed value for the attribute of the transmission path. Alternatively, the quantitative value may be a value range. For example, for the attribute, namely, the latency, the quantitative value may be (8 ms to 10 ms). In other words, transmission of a packet whose latency requirement is less than 10 ms can be guaranteed on the transmission path, and generally, transmission with a latency requirement of less than 8 ms can be guaranteed. If a latency requirement of a service packet is 8 ms, the transmission path can also meet a latency requirement of the service packet in most cases. Similarly, the amount required may also be an accurate value. For example, if the amount required for latency is 10 ms, it indicates that a minimum requirement for the latency is 10 ms. The amount required may alternatively be a value range. For example, a latency requirement (8 ms to 10 ms) indicates that a latency needs to be less than 8 ms if possible, and a maximum latency cannot exceed 10 ms.

In a possible implementation of the first aspect, when the traffic-related attribute includes a bandwidth, the foregoing step that the first forwarding device determines, based on the traffic requirement information and respective attribute information of the at least two transmission paths, a first transmission path that meets a traffic requirement may include: The first forwarding device determines, from the at least two transmission paths based on an amount required for the bandwidth, a transmission path whose quantitative value of a bandwidth is not less than the amount required for the bandwidth as the first transmission path.

In this possible implementation, for an attribute, namely, the bandwidth, a transmission path whose load bandwidth is greater than the amount required for the bandwidth is to be selected, to ensure that the bandwidth is sufficient for transmitting a service packet.

In a possible implementation of the first aspect, when the traffic-related attribute includes a latency, the foregoing step that the first forwarding device determines, based on the traffic requirement information and respective attribute information of the at least two transmission paths, a first transmission path that meets a traffic requirement may include: The first forwarding device determines, from the at least two transmission paths based on an amount required for the latency, a transmission path whose quantitative value of a latency is not greater than the amount required for the latency as the first transmission path.

In this possible implementation, for the attribute, namely, the latency, a transmission path whose load latency is less than the amount required for the latency is to be selected, to ensure that a service packet can be transmitted in time.

In a possible implementation of the first aspect, when the traffic-related attribute includes a jitter, the foregoing step that the first forwarding device determines, based on the traffic requirement information and respective attribute information of the at least two transmission paths, a first transmission path that meets a traffic requirement may include: The first forwarding device determines, from the at least two transmission paths based on an amount required for the jitter, a transmission path whose quantitative value of a jitter is not greater than the amount required for the jitter as the first transmission path.

In this possible implementation, for an attribute, namely, the jitter, a transmission path whose load jitter is less than the amount required for the jitter is to be selected, to ensure that a service packet can be transmitted correctly.

In a possible implementation of the first aspect, when the traffic-related attribute includes a packet loss rate, the foregoing step that the first forwarding device determines, based on the traffic requirement information and respective attribute information of the at least two transmission paths, a first transmission path that meets a traffic requirement may include: The first forwarding device determines, from the at least two transmission paths based on an amount required for the packet loss rate, a transmission path whose quantitative value of a packet loss rate is not greater than the amount required for the packet loss rate as the first transmission path.

In this possible implementation, for an attribute, namely, the packet loss rate, a transmission path whose load packet loss rate is less than or equal to the amount required for the packet loss rate is to be selected, to ensure that service packet loss rate does not exceed the requirement amount.

In a possible implementation of the first aspect, the method may further include:
If the first forwarding device determines that the service packet is the VPN service packet, the first forwarding device shapes the VPN service packet based on the traffic requirement information of the VPN. The first forwarding device sends a shaped VPN service packet to the second forwarding device through the first transmission path.

In this possible implementation, for the VPN service packet, to not exceed the reserved resource, shaping needs to be performed on an exceeded part, to ensure that the reserved resource meets a transmission requirement of the VPN service packet.

In a possible implementation of the first aspect, an extended segment routing policy is delivered according to an extended Border Gateway Protocol BGP, a path computation element protocol (path computation element protocol, PCEP), or a network configuration protocol (the network configuration protocol, NETCONF).

In this possible implementation, the extended segment routing policy may be carried in an idle field or an extended field in a BGP packet, a PCEP packet, or a NETCONF packet.

A second unclaimed aspect of this application provides a service packet transmission method. The method is applied to a communication network. The communication network includes a control device, a first forwarding device, and a second forwarding device. There are at least two transmission paths between the first forwarding device and the second forwarding device. The first forwarding device is a start forwarding device on the transmission path. The method is performed by the control device. The method may include: The control device determines a segment routing policy. The segment routing policy includes respective attribute information of the at least two transmission paths, and the attribute information of each of the at least two transmission paths includes an attribute used to indicate a transmission capability of the transmission path and a quantitative value corresponding to the attribute. The control device sends the segment routing policy to the first forwarding device, where the segment routing policy is used by the first forwarding device to determine, based on the traffic requirement information and the respective attribute information of the transmission path, a first transmission path that meets the traffic requirement and that is used to transmit a service packet, and the traffic requirement information includes a traffic-related attribute, and an amount required for the attribute.

In the second aspect, the segment routing policy (SR Policy) may be an extended SR policy, the SR policy includes the attribute information of each of the transmission paths, and the attribute information may include an attribute of at least one dimension and a quantitative value of the attribute of each dimension. This quantitative value is a maximum guaranteed amount. Alternatively, the quantitative value may be a value range that indicates a guaranteed value range for the attribute. The segment routing policy is delivered to the first forwarding device. The traffic requirement information received by the first forwarding device may also include a requirement on the transmission path for the attribute of the at least one dimension and a corresponding amount required for the attribute. The amount required may be a specific value, or may be a value range. In the foregoing second aspect, when a requirement for an attribute of each dimension of a fine granularity is clear, and a quantitative value of the fine granularity provided by the transmission path is also clear, an appropriate transmission path that meets the traffic requirement can be accurately determined, which improves path selection accuracy.

In a possible implementation of the second aspect, the foregoing step that the control device determines a segment routing policy may include: The control device collects, for different attribute information of each transmission path according to a collection policy of a guarantee type corresponding to the attribute information, a quantitative value of each attribute, where the guarantee type is used to indicate a trustworthiness degree of the quantitative value corresponding to the attribute.

In this possible implementation, there are collection policies of guarantee types corresponding to a plurality of attributes such as a bandwidth, a latency, a jitter, a packet loss rate, reliability, security, and isolation. The control device may collect, according to these different collection policies, a quantitative value of an attribute of each dimension of each transmission path, that is, a maximum guaranteed amount, to mark the quantitative value of the attribute of each dimension of each transmission path in the extended policy. The guarantee type of the quantitative value corresponding to each attribute refers to a trustworthiness degree of the quantitative value, and the trustworthiness degree is related to a technology for collecting the quantitative value. Quantitative values collected by using some technologies are of high accuracy. When the guarantee type is indication information of one of the technologies, the quantitative value is more reliable. Quantitative values collected by using some technologies are of low accuracy. When the guarantee type is indication information of one of the technologies, the quantitative value is less reliable. For example, for an attribute, namely, a latency, on a transmission path, a quantitative value is 10 ms. If a guarantee type is 0, it indicates that it is of low reliability that the latency on the transmission path can reach 10 ms, for example, the reliability may reach only 90%. If a guarantee type is 1, it indicates that it is of moderate reliability that the latency of the transmission path can reach 10 ms, for example, the reliability may reach 95%. If a guarantee type is 2, it indicates that it is of moderate reliability that the latency of the transmission path can reach 10 ms, for example, the reliability may reach 99.99%. Certainly, the guarantee types 0, 1, and 2 herein are merely examples, and there may be a plurality of representation forms of the guarantee types. This is not limited in this application.

In a possible implementation of the second aspect, the segment routing policy is delivered according to a Border Gateway Protocol BGP, a Path Computation Element Protocol PCEP, or a Network Configuration Protocol NETCONF.

In a possible implementation of the second aspect, the quantitative value includes a single value or a value range, and/or the amount required includes a single value or a value range.

In this possible implementation, it should be noted that the quantitative value of the attribute of the transmission path may be an accurate value, namely, a guaranteed value for the attribute of the transmission path. Alternatively, the quantitative value may be a value range. For example, for the attribute, namely, the latency, the quantitative value may be (8 ms to 10 ms). In other words, transmission of a packet whose latency requirement is less than 10 ms can be guaranteed on the transmission path, and generally, transmission with a latency requirement of less than 8 ms can be guaranteed. If a latency requirement of a service packet is 8 ms, the transmission path can also meet a latency requirement of the service packet in most cases. Similarly, the amount required may also be an accurate value. For example, if the amount required for latency is 10 ms, it indicates that a minimum requirement for the latency is 10 ms. The amount required may alternatively be a value range. For example, a latency requirement (8 ms to 10 ms) indicates that a latency needs to be less than 8 ms if possible, and a maximum latency cannot exceed 10 ms.

In a possible implementation of the second aspect, the respective attribute information of the at least two transmission paths includes at least one of the following: a bandwidth, a latency, a jitter, a packet loss rate, reliability, security, and isolation.

A third aspect of this application provides a forwarding device, configured to perform the method according to any one of the first aspect or the possible implementations of the first aspect. Specifically, the forwarding device includes modules or units configured to perform the method according to any one of the first aspect or the possible implementations of the first aspect.

A fourth unclaimed aspect of this application provides a control device, configured to perform the method according to any one of the second aspect or the possible implementations of the second aspect. Specifically, the control device includes modules or units configured to perform the method according to any one of the second aspect or the possible implementations of the second aspect.

A fifth aspect of this application provides a routing system comprising the first forwarding device of the third aspect, the second forwarding device and the control device. The control device is configured to determine a segment routing policy, wherein the segment routing policy comprises respective attribute information of at least two transmission paths between the first forwarding device and the second forwarding device, and the attribute information of each of the at least two transmission paths comprises an attribute used to indicate a transmission capability of the transmission path and a quantitative value corresponding to the attribute. Further, the control device is configured to send the segment routing policy to the first forwarding device .

A sixth unclaimed aspect of this application provides a control device, including at least one processor, a memory, a transceiver, and computer-executable instructions that are stored in the memory and that can be run on the processor. When the computer-executable instructions are executed by the processor, the processor performs the method according to any one of the second aspect or the possible implementations of the second aspect.

A seventh aspect of this application provides a computer-readable storage medium storing one or more computer-executable instructions. When the computer-executable instructions are executed by a processor, the processor performs the method according to any one of the first aspect or the possible implementations of the first aspect.

An eighth unclaimed aspect of this application provides a computer-readable storage medium storing one or more computer-executable instructions. When the computer-executable instructions are executed by a processor, the processor performs the method according to any one of the second aspect or the possible implementations of the second aspect.

A ninth unclaimed aspect of this application provides a computer program product storing one or more computer-executable instructions. When the computer-executable instructions are executed by a processor, the processor performs the method according to any one of the first aspect or the possible implementations of the first aspect.

A tenth unclaimed aspect of this application provides a computer program product storing one or more computer-executable instructions. When the computer-executable instructions are executed by a processor, the processor performs the method according to any one of the second aspect or the possible implementations of the second aspect.

The forwarding device described in the third aspect, the fifth aspect, the seventh aspect, and the ninth aspect may alternatively be a chip used in the forwarding device, or another combined device, component, or the like that has a function of the forwarding device.

The control device described in the fourth aspect, the sixth aspect, the eighth aspect, and the tenth aspect may alternatively be a chip used in the control device, or another combined device, component, or the like that has a function of the control device.

For technical effects brought by any one of the third aspect, the fifth aspect, the seventh aspect, the ninth aspect, or any possible implementation thereof, refer to the technical effects brought by the first aspect or different possible implementations of the first aspect. Details are not described herein again.

For technical effects brought by any one of the fourth aspect, the sixth aspect, the eighth aspect, the tenth aspect, or any possible implementation thereof, refer to the technical effects brought by the second aspect or different possible implementations of the second aspect. Details are not described herein again.

In the solution provided in this application, the control device delivers the respective attribute information of the at least two transmission paths to the first forwarding device. In this way, after receiving the traffic requirement information, the first forwarding device may determine, based on the traffic requirement information and the respective attribute information of the at least two transmission paths, the first transmission path that meets the traffic requirement. After the service packet is received, the first transmission path is used to transmit the service packet. The technical solutions of this application can provide the attributes of the paths and the quantitative value corresponding to each attribute. In this way, the appropriate path that meets the traffic requirement can be accurately selected.

### BRIEF DESCRIPTION OF DRAWINGS

FIG. 1 is a schematic diagram of a structure of a routing system according to this application;
FIG. 2 is a schematic diagram of a simplified structure of a routing system according to this application;
FIG. 3 is a schematic diagram of another structure of a routing system according to this application;
FIG. 4 is a schematic diagram of another structure of a routing system according to an embodiment of this application;
FIG. 5 is a schematic diagram of an embodiment of a service packet transmission method according to this application:
FIG. 6 is a schematic diagram of another structure of a routing system according to application;
FIG. 7 is a schematic diagram of an embodiment of a service packet transmission method according to an embodiment of this application;
FIG. 8 is a schematic diagram of an embodiment of a forwarding device according to this application;
FIG. 9 is a schematic diagram of an embodiment of a control device according to the embodiments of this application;
FIG. 10 is a schematic diagram of another embodiment of a forwarding device according to the embodiments of this application; and
FIG. 11 is a schematic diagram of another embodiment of a control device according to the embodiments of this application.

### DESCRIPTION OF EMBODIMENTS

The following describes embodiments of this application with reference to accompanying drawings. It is clear that the described embodiments are merely some rather than all of the embodiments of this application. Persons of ordinary skill in the art may learn that, with development of technologies and emergence of new scenarios, technical solutions provided in the embodiments of this application are also applicable to similar technical problems.

In the specification, claims, and the accompanying drawings of this application, the terms "first", "second", and the like are intended to distinguish between similar objects but do not necessarily indicate a specific order or sequence. It should be understood that data termed in such a way is interchangeable in proper circumstances, so that the embodiments described herein can be implemented in other orders than the order illustrated or described herein. Moreover, the terms "include", "contain" and any other variants mean to cover non-exclusive inclusion. For example, a process, method, system, product, or device that includes a list of steps or units is not necessarily limited to those expressly listed steps or units, but may include other steps or units that are not expressly listed or inherent to the process, method, product, or device.

The embodiments of this application provide a service packet transmission method, which can provide attributes of a path and a quantitative value corresponding to each attribute. In this way, an appropriate path that meets a traffic requirement can be accurately selected. The embodiments of this application further provide a corresponding device and system. The following separately provides detailed descriptions.

A service packet needs to be transmitted from one terminal device to another terminal device through a communication network. The communication network may be a routing network. In the embodiments of this application, an example in which the communication network is a routing network is used for description. The routing network generally includes a plurality of forwarding devices, and the forwarding device may be a router, a switch, or another device with a routing function. A plurality of forwarding devices in the routing network are interconnected. In addition, there may further be a plurality of ports on one forwarding device. Even one forwarding device may provide a plurality of different transmission paths. Therefore, in a process of transmitting the service packet on the routing network, there may be a plurality of transmission paths for selection. A bandwidth, a latency, a jitter, a packet loss rate, reliability, isolation, security, and other attributes of each path may be different. A control device plans a transmission path based on a topology structure of the routing network, and collects attribute information of each transmission path. In this way, during service packet transmission, one or more appropriate transmission paths may be provided for the service packet based on a requirement of the service packet.

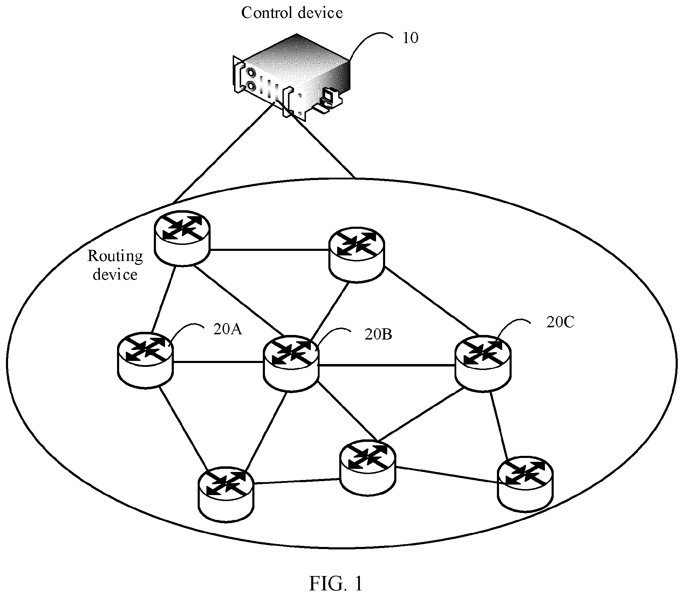

FIG. 1 is a schematic diagram of a structure of a routing system according to an embodiment of this application.

As shown in FIG. 1, an embodiment of the routing system provided in this embodiment of this application may include a control device 10 and a plurality of forwarding devices. The forwarding devices may be interconnected, and one or more transmission paths may be planned between two or more interconnected forwarding devices. A forwarding device 20A, a forwarding device 20B, and a forwarding device 20C in FIG. 1 are used as examples. If each of the three forwarding devices has only one port, the forwarding device 20A, the forwarding device 20B, and the forwarding device 20C may form a transmission path. If the forwarding device 20B has two ports, and both the forwarding device 20A and the forwarding device 20C have only one port, there may be two transmission paths between the forwarding device 20A, the forwarding device 20B, and the forwarding device 20C. Certainly, the forwarding device 20A and the forwarding device 20C are not limited to only one port, and the forwarding device 20B may further have more ports. It can be learned that there a plurality of transmission paths that may be planned by the control device 10 for a routing network. However, regardless of a quantity of transmission paths, the control device 10 manages these transmission paths.

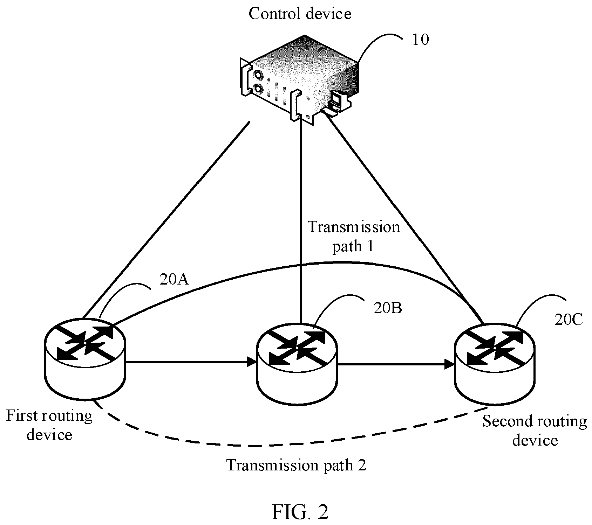

For ease of description, an example in which the forwarding device 20B has two ports, both the forwarding device 20A and the forwarding device 20C have only one port, and there may be two transmission paths between the forwarding device 20A, the forwarding device 20B, and the forwarding device 20C is used. For ease of presentation, in a schematic diagram of a simplified structure of a routing system in FIG. 2, the forwarding device 20A, the forwarding device 20B, and the forwarding device 20C are separated from the diagram of the structure shown in FIG. 1. Transmission paths between the forwarding device 20A, the forwarding device 20B, and the forwarding device 20C may include a transmission path 1 and a transmission path 2.

The control device 10 may plan the transmission path 1 and the transmission path 2 between the forwarding device 20A, the forwarding device 20B, and the forwarding device 20C, further monitor usage statuses of the transmission path 1 and the transmission path 2, and further collect attribute information of the transmission path 1 and the transmission path 2. For the attribute information of each transmission path, refer to Table 1 below for understanding.

**Table 1: Attribute information table of a transmission path**

| Attribute | Quantitative value | Guarantee type | Description (description) |
|---|---|---|---|
| Latency (latency) | 30 | Measurement (measurement) | The latency indicates an upper end-to-end latency limit of the transmission path. Unit: milliseconds (ms). A default value is 0, which indicates that the transmission path has no latency guarantee. |
| Jitter (jitter) | 10 | Deterministic latency (detnet) | The jitter indicates an upper end-to-end jitter limit of the transmission path. Unit: ms. A default value is 0, which indicates that the transmission path has no jitter guarantee. |
| Bandwidth (bandwidth) | 500 | Control device (controller) | The bandwidth indicates a bandwidth guarantee of the transmission path. Unit: megabits per second (Mbit/s). A default value is 0, which indicates that the transmission path has no bandwidth guarantee. |
| Packet loss rate (loss rate) | 0.01% | Packet test | The packet loss rate indicates a packet loss rate guarantee of the transmission path. Unit: %. The default value is 0, which indicates that the transmission path has no packet loss rate. |
| Reliability (reliability) | 99.99% | Seamless redundancy (seamless redundancy) | The reliability indicates a reliability guarantee of the transmission path. Unit: %. The default value is 0, which indicates that the transmission path has no reliability guarantee. |
| Attribute | Quantitative value | Guarantee type | Description (description) |
| Isolation (isolation) | 1 | Virtual private network (VPN) | The isolation indicates that the transmission path is isolated from other transmission paths. The default value is 0, which indicates that there is no isolation guarantee. |
| Security (security) | High (high) | Internet Protocol security (Internet Protocol security, IPsec) | The security indicates a security level of the transmission path. The default value is 0, which indicates that the transmission path has no security guarantee. |
| ... | ... | ... | ... |

It can be learned from Table 1 that there may be one or more attributes of each transmission path in Table 1. For each attribute, the control device 10 has a corresponding policy to collect information about the attribute. A column of guarantee types in Table 1 represents a technology for collecting a quantitative value of the attribute in a same row as the quantitative value. Certainly, only one collection technology is enumerated for each attribute in Table 1. In practice, there may be a plurality of technologies for collecting each attribute. In addition, accuracy of collecting a quantitative value by using each technology varies. For example, the latency is used as an example. There are three manners for collecting a quantitative value of the latency: a technology A, a technology B, and a technology C. Accuracy of a quantitative value collected by using the technology A is lower than accuracy of a quantitative value collected by using the technology B. The accuracy of the quantitative value collected by using the technology B is lower than accuracy of a quantitative value collected by using the technology C. Therefore, the guarantee type in this embodiment of this application represents indication information of various collection technologies. For example, the technology A is represented by 0, the technology B is represented by 1, and the technology C is represented by 2. Certainly, 0, 1, and 2 are used only as examples for description herein. In practice, a specific form of the guarantee type is not limited in this application. The guarantee type actually indicates a trustworthiness degree of a corresponding quantitative value. Therefore, the guarantee type may also be a trustworthiness value directly. This is not specifically limited in this application, provided that the trustworthiness degree of the quantitative value can be expressed.

The technology A may be a deterministic latency (DetNet)/time sensitive network (time sensitive network, TSN). The technology indicates that a time gating mechanism is used to ensure an end-to-end latency. The technology B may be a flexible Ethernet (flex Ethernet, FleX-E) cross-connection technology. The technology indicates that a forwarding mode of time division multiplexing (time division multiplexing, TDM) is used to ensure an upper limit of the latency. The technology C may be a network calculus technology. The technology indicates that an upper limit of the latency is proved according to a theory.

In the foregoing description, the latency is used as the example for description. Technologies used for different attributes may be different. For example, for the bandwidth, a resource may be reserved on a path by using distributed signaling. Alternatively, a controller may collect network capabilities through access, reserve a bandwidth resource for each flow along the path, and maintain a reservation status. For the reliability, active/standby path switchover may be performed. To be specific, when the network is running correctly, packets are transmitted over an active path. When the active path fails, a standby path is switched to. Alternatively, multiple-fed and selective receiving may be used. To be specific, a same flow is replicated on a network and transmitted over two disjoint paths at the same time. At a merging node, a packet first received is forwarded, and a redundant packet is discarded.

The following describes meanings of each attribute and the quantitative value by using the collection technology listed in the column of the type in Table 1 as an example.

For the latency, the control device 10 may collect the latency in a manner of measuring the transmission path. If a maximum value of a transmission latency of the transmission path is 30 ms through measurement performed for a period of time, it may be determined that an upper limit of a guaranteed latency of the transmission path is 30 ms.

For the jitter, the control device 10 may collect the jitter according to a deterministic latency (detnet) policy. To be specific, when the latency is determined, a maximum jitter, namely, 10 ms, on the transmission path can be calculated through measurement for a period of time. In this case, it may be determined that an upper limit of a guaranteed jitter of the transmission path is 10 ms.

For the bandwidth, the control device 10 may directly manage and control the bandwidth of each transmission path. For example, when the bandwidth of the transmission path is 500 Mbit/s, it indicates that a maximum bandwidth that can be provided by the transmission path is 500 Mbit/s.

For the packet loss rate, the control device 10 may monitor, in a packet test manner, sent packets and received packets within a period of time, to calculate the packet loss rate. For example, a packet loss rate of 0.01% indicates that a maximum packet loss rate of the transmission path is 0.01%. In other words, it can be ensured that a service packet with a requirement that a packet loss rate is less than 0.01% can be transmitted.

For the reliability, the control device 10 may test the reliability of the transmission path according to a seamless redundancy (Seamless redundancy) policy. In other words, a probability that a malicious attack on the transmission path succeeds may be tested. The reliability refers to a probability that the attack on transmission path does not succeed. 99.99% indicates minimum reliability of the transmission path.

For the isolation, the control device 10 may test the isolation of the transmission path in a VPN manner. That the isolation is 1 indicates that the control device 10 is completely isolated from another transmission path, and there is no cross connection with the another transmission path.

For the security, the control device 10 may determine the security of the transmission path based on Internet Protocol security (IPsec). If the transmission path is identified as high (high), it indicates that the transmission path is secure.

For the transmission path 1 and the transmission path 2, the control device may determine attributes of the two transmission paths and a quantitative value of each attribute, where the quantitative value is an amount that can be guaranteed. For example:
The attribute information of the transmission path 1 may include <latency 10 ms, jitter 5 ms, bandwidth 5G, packet loss rate 0.05%, reliability 99.99%, isolation 1, security: high>.

The attribute information of the transmission path 2 may include <latency 20 ms, jitter 10 ms, bandwidth 2G, packet loss rate 0.02%, security 99.97%, isolation 1, security: high>.

Certainly, the attribute information of the transmission path 1 and the attribute information of the transmission path 2 are merely examples. Alternatively, the control device may maintain only one or more pieces of attribute information, but does not maintain all the foregoing enumerated information.

When an idea of the schematic diagram described in FIG. 2 is applied to the structure in FIG. 1, corresponding attribute information is maintained on the control device for each transmission path in the routing network, and types and values of attributes included in attribute information of each transmission path may be the same. But in most cases, the types and the values may not be the same.

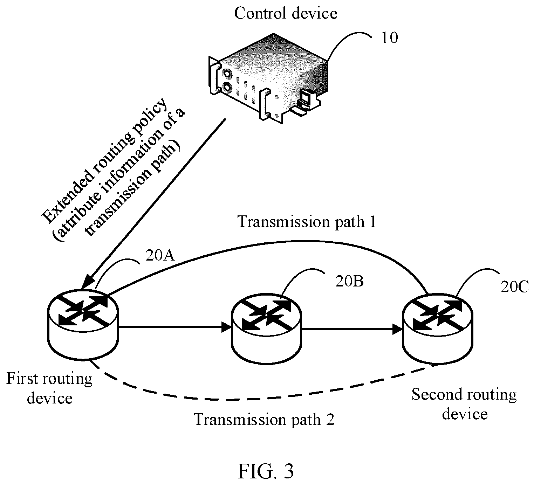

The attribute information that is of each transmission path and that is collected by the control device 10 may be used in a service packet transmission process. In a schematic diagram of another structure of a routing system in FIG. 3, the control device 10 may deliver the attribute information of the transmission path to the first forwarding device on the transmission path according to a segment routing (segment routing, SR) policy (policy). In FIG. 3, for both the transmission path 1 and the transmission path 2, the first forwarding device is the first forwarding device 20A.

The control device 10 determines a segment routing policy (SR Policy), and then sends the segment routing policy to the first forwarding device 20A. The segment routing policy includes the respective attribute information of the two transmission paths, namely, the attribute information of each of the transmission path 1 and the transmission path 2. The attribute information of each transmission path includes an attribute used to indicate a transmission capability of the transmission path, and a quantitative value corresponding to the attribute. The SR policy is a new tunneling technology developed based on an SR technology. An SR Policy path is represented as a segment list (Segment List) of a specified path, which is referred to as a Segment ID List (SID list). Therefore, the SR Policy actually indicates an explicit path or a corresponding service. An extended SR Policy in this application extends each piece of attribute information and a quantitative value of each piece of attribute information.

The extended segment routing policy may be delivered by the control device 10 according to an extended border gateway protocol (border gateway protocol, BGP), a path computation element protocol (path computation element protocol, PCEP), or a network configuration protocol (network configuration protocol, NETCONF). The attribute information of the transmission path may be carried in an idle field or a newly added field in the foregoing protocols. That the control device 10 determines the extended segment routing policy may be that the control device collects a quantitative value of each attribute for different attribute information of each transmission path according to a collection policy of a guarantee type corresponding to the attribute information. The process may be understood with reference to corresponding content in Table 1 in the foregoing embodiment.

That the attribute information of the transmission path may be carried in an idle field or a newly added field in the foregoing protocols is described with an example in which the attribute information of the transmission path is delivered according to the BGP. A BGP packet usually includes a plurality of bytes, for example, 4096 bytes. The BGP packet includes a packet header and packet content. When the attribute information of the transmission path is carried in the BGP packet, the attribute information of the transmission path may be written into idle bytes in the packet content. For example, if the last 96 bytes are idle, the attribute information of the transmission path 1 and the attribute information of the transmission path 2 may be carried in the last 96 bytes. In addition, a location of the attribute information recorded in the packet content is recorded in the packet header. For example, that 4001-4096 is recorded on a location of a path attribute in the packet header indicates that the attribute information of the transmission path 1 and the attribute information of the transmission path 2 is recorded on the last 96 bytes. Certainly, 4001-4096 is merely an example manner, and an actual recording manner is not limited in this application. A manner for recording a quantitative value of an attribute of each dimension of each transmission path in the packet content may be T1 (indicating the transmission path 1); L (indicating the latency): 10 (indicating 10 milliseconds); B (indicating the bandwidth): 500 (indicating 500 Mbit/s) A manner for recording other attributes may be deduced by analogy, and is not listed here. A principle of carrying the attribute information of the transmission path in the newly added field is the same as carrying that in the idle field, simply with extending of a length of the BGP packet in the conventional technology. For example, the length of the BGP packet is extended to 4192 bytes on a basis of 4096 bytes.

A BGP packet in the conventional technology includes a field corresponding to the SR Policy, and an indication value (color) in the SR Policy is included content. In the foregoing packet header, the location recorded in the path attribute may be carried in a byte of the color. Alternatively, one or more new bytes may be extended to the end of the color to record the location recorded on the path attribute.

After receiving the SR Policy delivered by the control device 10, the first forwarding device 20A maintains the attribute information of each transmission path. A maintenance process may be establishing an attribute information table of the transmission path, as shown in Table 2.

**Table 2: Attribute information table of a transmission path**

| Attribute information of a transmission path 1 | | |
|---|---|---|
| Attribute | Quantification value (Unit) | Guarantee type |
| Latency | 10 ms | 2 |
| Jitter | 10 ms | 1 |
| Bandwidth | 500M | 1 |
| Packet loss rate | 0.1% | 0 |

| Attribute information of a transmission path 2 | | |
|---|---|---|
| Latency | 20 ms | 1 |
| Jitter | 15 ms | 1 |
| Bandwidth | 1024M | 0 |
| Packet loss rate | 0.01% | 0 |

The first forwarding device 20A maintains the attribute information table, for example, the table shown in Table 2. After receiving a service packet, the first forwarding device 20 obtains traffic requirement information from the service packet, or after receiving traffic requirement information sent by the second forwarding device 20C, the first forwarding device 20A may determine, based on the traffic requirement information and the attribute information of each transmission path, a first transmission path that meets a traffic requirement, where the first transmission path is used to transmit a service packet, and the traffic requirement information includes a traffic-related attribute and an amount required for the attribute.

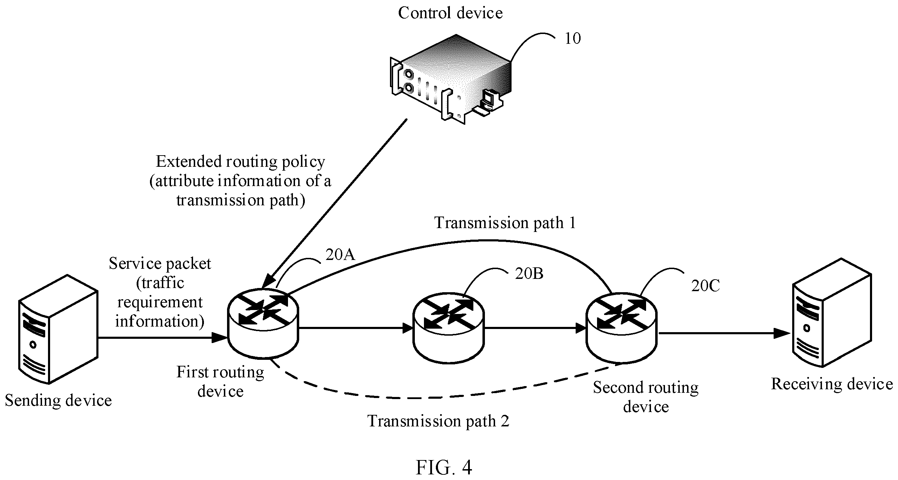

A scenario in which the service packet carries the traffic requirement information may be understood with reference to FIG. 4. In FIG. 4, the first forwarding device 20A receives a service packet sent by a sending device, where the service packet carries traffic requirement information, and the traffic requirement information includes a traffic-related attribute and an amount required for the attribute. The first forwarding device 20A may determine an appropriate transmission path for the service packet based on the traffic requirement information in the service packet and the attribute information of each transmission path, and transmit the service packet to the second forwarding device 20C through the transmission path. The second forwarding device 20C is a last forwarding device on the transmission path. The second forwarding device 20C sends the service packet to a receiving device based on a destination address of the service packet. The sending device and the receiving device in the embodiments of this application each may be a terminal device, or may be a network device.

The terminal device in the embodiments of this application may include various handheld devices, vehicle-mounted devices, wearable devices, or computing devices that have a wireless communication function, or other processing devices connected to a wireless modem. The terminal may be a mobile station (mobile station, MS), a subscriber module (subscriber unit), a cellular phone (cellular phone), a smartphone (smartphone), a wireless data card, a personal digital assistant (personal digital assistant, PDA for short) computer, a tablet computer, a wireless modem (modem), a handheld device (handset), a laptop computer (laptop computer), a machine type communication (machine type communication, MTC) terminal, or the like.

The network device in the embodiments of this application may be a base station (base station, BS), a NodeB, or an evolved NodeB (evolved NodeB, eNB), or may be a gNodeB (gNB), a transmission point (transmission point, TP), or a Wi-Fi access point (access point, AP) in a 5G system (or referred to as a new radio (new radio, NR) system). Certainly, the network device may alternatively be another network device that has similar base station functions and that can send control information to the terminal device.

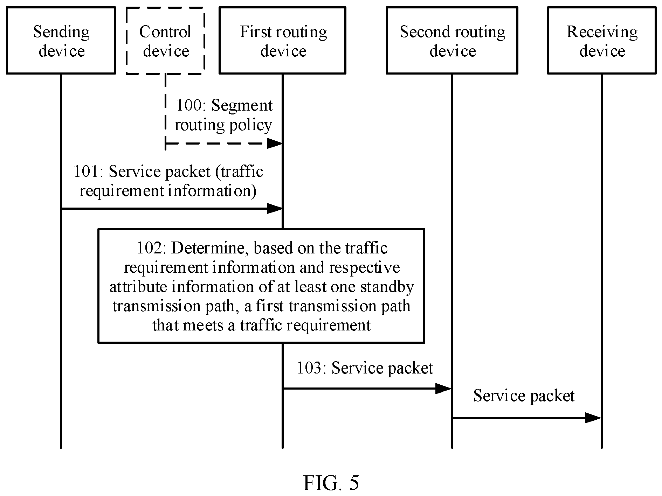

An embodiment of a service packet transmission method in this scenario may be understood with reference to FIG. 5.

As shown in FIG. 5, the embodiment of the service packet transmission method provided in this embodiment of this application may include the following steps.

101: A first forwarding device receives a service packet, where the service packet includes traffic requirement information.

The traffic requirement information includes a traffic-related attribute and an amount required for the attribute. The traffic-related attribute may include one or more of a bandwidth, a latency, a jitter, a packet loss rate, reliability, security, isolation, and security, or may further include another attribute not listed in the table.

The amount required for the attribute refers to a specific requirement for one or more of the foregoing attributes. For example, the bandwidth needs to be 2G, the latency needs to be less than 20 ms, and the jitter needs to be less than 10 ms.

Before step 101, there may be step 100: A control device delivers a segment routing policy to the first forwarding device, where the segment routing policy includes attribute information of each transmission path.

Step 100 is performed after the attribute information of each transmission path is collected, or is performed until the attribute information of each transmission path is updated, or is performed periodically.

102: The first forwarding device determines, based on the traffic requirement information and respective attribute information of at least two transmission paths, a first transmission path that meets a traffic requirement.

The service packet carries triplet information or 5-tuple information, where the triplet information includes a source address, a transmission protocol, and a destination address, and the 5-tuple information includes a source address, a source port number, a transmission protocol, a destination address, and a destination port number. Therefore, the first forwarding device determines, based on the triplet information or the 5-tuple information, all transmission paths possible to be used to forward the service packet. A controller collects information about these possible transmission paths in a network planning phase. An information collection process is described in the foregoing Table 1. Therefore, the first forwarding device stores attribute information of the possible transmission paths. For understanding herein, refer to the description in Table 2. Table 2 illustrates a transmission path 1 and a transmission path 2. Compositions of the transmission path 1 and the transmission path 2 are described below with reference to FIG. 4. The transmission path shown in FIG. 4 includes a forwarding device 20A, a forwarding device 20B, and a forwarding device 20C. The forwarding device 20B has two ports, namely, a first port and a second port. The transmission path 1 is from the forwarding device 20A to a first port of the forwarding device 20B, and then to the forwarding device 20C. The transmission path 2 is from the forwarding device 20A to a second port of the forwarding device 20B, and then to the forwarding device 20C.

Next, the first forwarding device determines the first transmission path based on the attribute carried in the traffic requirement information and the amount required for the attribute.

In a specific implementation, when the traffic-related attribute includes the bandwidth, step 102 may be: The first forwarding device determines, from each of the transmission paths based on an amount required for the bandwidth, a transmission path whose quantitative value of a bandwidth is not less than the amount required for the bandwidth as the first transmission path.

In a specific implementation, when the traffic-related attribute includes the latency, step 102 may be: The first forwarding device determines, from each of the transmission paths based on an amount required for the latency, a transmission path whose quantitative value of a latency is not greater than the amount required for the latency as the first transmission path.

In a specific implementation, when the traffic-related attribute includes the jitter, step 102 may be: The first forwarding device determines, from each of the transmission paths based on an amount required for the jitter, a transmission path whose quantitative value of a jitter is not greater than the amount required for the jitter as the first transmission path.

In a specific implementation, when the traffic-related attribute includes the packet loss rate, step 102 may be: The first forwarding device determines, from each of the transmission paths based on an amount required for the packet loss rate, a transmission path whose quantitative value of a packet loss rate is not greater than the amount required for the packet loss rate as the first transmission path.

In a specific implementation, when the segment routing policy further includes a guarantee type of a quantitative value corresponding to the attribute, and the guarantee type is used to indicate a trustworthiness degree of the quantitative value corresponding to the attribute, the step 102 may include:
The first forwarding device determines, based on the traffic requirement information, the respective attribute information of the at least two transmission path, and the guarantee type, the first transmission path that meets the traffic requirement.

In a specific implementation, that the first forwarding device determines, based on the traffic requirement information, the respective attribute information of the at least one transmission path, and the guarantee type, the first transmission path that meets the traffic requirement may include:
The first forwarding device determines, based on the traffic requirement information and the respective attribute information of the at least one transmission path, at least two transmission paths that meet the traffic requirement, where the at least two transmission paths that meet the traffic requirement include a second transmission path and a third transmission path;
the first forwarding device determines, based on the guarantee type, that a trustworthiness degree of a quantitative value of an attribute of the second transmission path is greater than a trustworthiness degree of a quantitative value of an attribute of the third transmission path; and
the first forwarding device determines the second transmission path as the first transmission path.

In this possible implementation, the guarantee type of the quantitative value corresponding to each attribute refers to a trustworthiness degree of the quantitative value, and the trustworthiness degree is related to a technology for collecting the quantitative value. Quantitative values collected by using some technologies are of high accuracy. When the guarantee type is indication information of one of the technologies, the quantitative value is more reliable. Quantitative values collected by using some technologies are of low accuracy. When the guarantee type is indication information of one of the technologies, the quantitative value is less reliable. For example, for an attribute, namely, a latency, on a transmission path, a quantitative value is 10 ms. If the guarantee type is 0, it indicates that it is of low reliability that the latency of the transmission path can reach 10 ms. For example, the reliability may reach only 90%. If the guarantee type is 1, it indicates that it is of moderate reliability that the latency of the transmission path can reach 10 ms, for example, the reliability may reach 95%. If the guarantee type is 2, it indicates that it is of moderate reliability that the latency of the transmission path can reach 10 ms, for example, the reliability may reach 99.99%. Certainly, the guarantee types 0, 1, and 2 herein are merely examples, and there may be a plurality of representation forms of the guarantee types. This is not limited in this application.

In a specific implementation, the traffic-related attribute includes a first attribute and a second attribute, and a priority of the first attribute is higher than a priority of the second attribute.

That the first forwarding device determines, based on the traffic requirement information and the respective attribute information of the at least one transmission path, the first transmission path that meets the traffic requirement may include:
When determining that there is no transmission path that is in the at least one transmission path and that meets an amount required for the first attribute and an amount required for the second attribute, the first forwarding device determines a transmission path that meets the amount required for the first attribute from the at least one transmission path as the first transmission path.

The foregoing only briefly describes determining the first transmission path, and the following describes an example with reference to a specific attribute and a corresponding quantitative value.

The following separately describes how to determine the first transmission path by using an example in which the attribute includes at least one of a bandwidth, a latency, a jitter, or a packet loss rate.

There are 15 combinations of a bandwidth, a latency, a jitter, and a packet loss rate: (1) a bandwidth, (2) a latency, (3) a jitter; (4) a packet loss rate; (5) a bandwidth and a latency; (6) a bandwidth and a jitter; (7) a bandwidth and a packet loss rate; (8) a latency and a jitter; (9) a latency and a packet loss rate; (10) a jitter and a packet loss rate; (11) a bandwidth, a latency, and a jitter; (12) a bandwidth, a latency, and a packet loss rate; (13) a bandwidth, a jitter, and a packet loss rate; (14) a latency, a jitter, and a packet loss rate; and (15) a bandwidth, a latency, a jitter, and a packet loss rate.

The following separately describes solutions for determining the first transmission path in the foregoing 15 cases.

### (1) Bandwidth

The traffic requirement information includes a bandwidth, and an amount required for the bandwidth is 3G.

It is assumed that a quantitative value of a bandwidth of the transmission path 1 is 5G, and a quantitative value of a bandwidth of the transmission path 2 is 2G. 5G>3G, and 2G<3G. In this case, it may be determined that the transmission path 1 meets the amount required for the bandwidth, and the transmission path 2 does not meet the requirement for the bandwidth; and therefore the transmission path 1 is determined as the first transmission path.

It is assumed that a quantitative value of a bandwidth of the transmission path 1 is 5G, and a quantitative value of a bandwidth of the transmission path 2 is 10G. 5G>3G, and 10G>3G. In this case, it may be determined that both the transmission path 1 and the transmission path 2 meet the requirement for the bandwidth, and a transmission path may be selected from the transmission path 1 and the transmission path 2 as the first transmission path.

It is assumed that a quantitative value of a bandwidth of the transmission path 1 is 1G, and a quantitative value of a bandwidth of the transmission path 2 is 2G. 1G<3G, and 2G<3G. In this case, it may be determined that neither the transmission path 1 nor the transmission path 2 meets the requirement for the bandwidth. In this case, the first transmission path cannot be directly determined. The first forwarding device needs to request the control device to allocate a transmission path that meets the requirement of 3G for the bandwidth to transmit a service packet.

### (2) Latency

The traffic requirement information includes a latency, and an amount required for the latency is 20 ms.

It is assumed that a quantitative value of a latency of the transmission path 1 is 10 ms, and a quantitative value of a latency of the transmission path 2 is 30 ms. 10 ms<20 ms, and 30 ms>20 ms. In this case, it may be determined that the transmission path 1 meets the requirement for the latency, and the transmission path 2 does not meet the requirement for the latency; and therefore the transmission path 1 is determined as the first transmission path.

It is assumed that a quantitative value of a latency of the transmission path 1 is 10 ms, and a quantitative value of a latency of the transmission path 2 is 5 ms. 10 ms<20 ms, and 5 ms<20 ms. In this case, it may be determined that both the transmission path 1 and the transmission path 2 meet the requirement for the latency, and a transmission path may be selected from the transmission path 1 and the transmission path 2 as the first transmission path. If a trustworthiness degree of a guarantee type of the transmission path 1 is greater than a trustworthiness degree of a guarantee type of the transmission path 2, the transmission path 1 is selected as the first transmission path.

It is assumed that a quantitative value of a latency of the transmission path 1 is 40 ms, and a quantitative value of a latency of the transmission path 2 is 30 ms. 40 ms>20 ms, and 30 ms>20 ms. In this case, it may be determined that neither the transmission path 1 nor the transmission path 2 meets the requirement for the latency, and the first forwarding device needs to request the control device to allocate a transmission path that meets the requirement of 20 ms for the latency to transmit a service packet.

### (3) Jitter

The traffic requirement information includes a jitter, and an amount required for the jitter is 20 ms.

It is assumed that a quantitative value of a jitter of the transmission path 1 is 10 ms, and a quantitative value of a jitter of the transmission path 2 is 30 ms. 10 ms<20 ms, and 30 ms>20 ms. In this case, it may be determined that the transmission path 1 meets the requirement for the jitter, and the transmission path 2 does not meet the requirement for the jitter; and therefore the transmission path 1 is determined as the first transmission path.

It is assumed that a quantitative value of a jitter of the transmission path 1 is 10 ms, and a quantitative value of a jitter of the transmission path 2 is 5 ms. 10 ms<20 ms, and 5 ms<20 ms. In this case, it may be determined that both the transmission path 1 and the transmission path 2 meet the requirement for the jitter, and a transmission path may be selected from the transmission path 1 and the transmission path 2 as the first transmission path. If a trustworthiness degree of a guarantee type of the transmission path 1 is greater than a trustworthiness degree of a guarantee type of the transmission path 2, the transmission path 1 is selected as the first transmission path.

It is assumed that a quantitative value of a jitter of the transmission path 1 is 40 ms, and a quantitative value of a jitter of the transmission path 2 is 30 ms. 40 ms>20 ms, and 30 ms>20 ms. In this case, it may be determined that neither the transmission path 1 nor the transmission path 2 meets the requirement for the jitter, and the first forwarding device needs to request the control device to allocate a transmission path that meets the requirement of 20 ms for the jitter to transmit a service packet.

### (4) Packet loss rate

The traffic requirement information includes a packet loss rate, and an amount required for the packet loss rate is 0.1%.

It is assumed that a quantitative value of a packet loss rate of the transmission path 1 is 0.05%, and a quantitative value of a packet loss rate of the transmission path 2 is 0.2%. 0.05%<0.1%, and 0.2%>0.1%. In this case, it may be determined that the transmission path 1 meets the requirement for the packet loss rate, and the transmission path 2 does not meet the requirement for the packet loss rate; and therefore the transmission path 1 is determined as the first transmission path.

It is assumed that a quantitative value of a packet loss rate of the transmission path 1 is 0.05%, and a quantitative value of a packet loss rate of the transmission path 2 is 0.08%. 0.05%<0.1%, and 0.08%<0.1%. In this case, it may be determined that both the transmission path 1 and the transmission path 2 meet the requirement for the packet loss rate, and a transmission path may be selected from the transmission path 1 and the transmission path 2 as the first transmission path. If a trustworthiness degree of a guarantee type of the transmission path 1 is greater than a trustworthiness degree of a guarantee type of the transmission path 2, the transmission path 1 is selected as the first transmission path.

It is assumed that a quantitative value of a packet loss rate of the transmission path 1 is 0.5%, and a quantitative value of a packet loss rate of the transmission path 2 is 0.2%. 0.5%>0.1%, and 0.2%>0.1%. In this case, it may be determined that neither the transmission path 1 nor the transmission path 2 meets the requirement for the packet loss rate, and the first forwarding device needs to request the control device to allocate a transmission path that meets the requirement of 0.1% for the packet loss rate to transmit a service packet.

### (5) Bandwidth and latency

For a combination requirement for a bandwidth and a latency, refer to a combination of the foregoing (1)+(2) for understanding. If a transmission path can meet the traffic requirement for both the bandwidth and the latency, the transmission path is selected as the first transmission path. If only the requirement for the bandwidth can be met, and a priority of the bandwidth is higher than that of the latency, a transmission path that meets the requirement for the bandwidth but does not meet the requirement for the latency may alternatively be selected as the first transmission path. Certainly, the control device may also be requested to reconfigure a transmission path that meets the requirement for both the bandwidth and the latency.

### (6) Bandwidth and jitter

For a combination requirement for a bandwidth and a jitter, refer to a combination of the foregoing (1)+(3) for understanding. If a transmission path can meet the traffic requirement for both the bandwidth and the jitter, the transmission path is selected as the first transmission path. If only the requirement for the bandwidth can be met, and a priority of the bandwidth is higher than that of the jitter, a transmission path that meets the requirement for the bandwidth but does not meet the requirement for the jitter may alternatively be selected as the first transmission path. Certainly, the control device may also be requested to reconfigure a transmission path that meets the requirement for both the bandwidth and the jitter.

### (7) Bandwidth and packet loss rate

For a combination requirement for a bandwidth and a packet loss rate, refer to a combination of the foregoing (1)+(4) for understanding. If a transmission path can meet the traffic requirement for both the bandwidth and the packet loss rate, the transmission path is selected as the first transmission path. If only the requirement for the bandwidth can be met, and a priority of the bandwidth is higher than that of the packet loss rate, a transmission path that meets the requirement for the bandwidth but does not meet the requirement for the packet loss rate may alternatively be selected as the first transmission path. Certainly, the control device may also be requested to reconfigure a transmission path that meets the requirement for both the bandwidth and the packet loss rate.

### (8) Latency and jitter

For a combination requirement for a latency and a jitter, refer to a combination of the foregoing (2)+(3) for understanding. If a transmission path can meet the traffic requirement for both the latency and the jitter, the transmission path is selected as the first transmission path. If only the requirement for the latency can be met, and a priority of the latency is higher than that of the jitter, a transmission path that meets the requirement for the latency but does not meet the requirement for the jitter may alternatively be selected as the first transmission path. Certainly, the control device may also be requested to reconfigure a transmission path that meets the requirement for both the latency and the jitter.

### (9) Latency and packet loss rate

For a combination requirement for a latency and a packet loss rate, refer to a combination of the foregoing (2)+(4) for understanding. If a transmission path can meet the traffic requirement for both the latency and the packet loss rate, the transmission path is selected as the first transmission path. If only the requirement for the latency can be met, and a priority of the latency is higher than that of the packet loss rate, a transmission path that meets the requirement for the latency but does not meet the requirement for the packet loss rate may alternatively be selected as the first transmission path. Certainly, the control device may also be requested to reconfigure a transmission path that meets the requirement for both the latency and the packet loss rate.

### (10) Jitter and packet loss rate

For a combination requirement for a jitter and a packet loss rate, refer to a combination of the foregoing (3)+(4) for understanding. If a transmission path can meet the traffic requirement for both the jitter and the packet loss rate, the transmission path is selected as the first transmission path. If only the requirement for the jitter can be met, and a priority of the jitter is higher than that of the packet loss rate, a transmission path that meets the requirement for the jitter but does not meet the requirement for the packet loss rate may alternatively be selected as the first transmission path. Certainly, the control device may also be requested to reconfigure a transmission path meets the requirement for both the jitter and the packet loss rate.

### (11) Bandwidth, latency, and jitter

For a combination requirement for a bandwidth, a latency, and a jitter, refer to a combination of the foregoing (1)+(2)+(3) for understanding. If a transmission path can meet the traffic requirement for the bandwidth, the latency, and the jitter, the transmission path is selected as the first transmission path. If only the requirement for the bandwidth and the latency can be met, and a priority of at least one of the bandwidth and the latency is higher than that of the jitter, a transmission path that can meet the requirement for the bandwidth and the latency may also be selected as the first transmission path. Similarly, if the requirement for the bandwidth and the jitter can be met, or the requirement for the latency and the jitter can be met, and a priority of either of the two is higher than that of the third attribute whose requirement cannot be met, the transmission path that can meet the requirement for the two may be selected as the first transmission path. If only the requirement for the bandwidth can be met, and a priority of the bandwidth is higher than a priority of the latency and a priority of the jitter, a transmission path that meets the requirement for the bandwidth but does not meet the requirement for the latency and the jitter may alternatively be selected as the first transmission path. Certainly, the control device may also be requested to reconfigure a transmission path that meets the requirement for the bandwidth, the latency, and the jitter.

### (12) Bandwidth, latency, and packet loss rate

For a combination requirement for a bandwidth, a latency, and a packet loss rate, refer to a combination of the foregoing (1)+(2)+(4) for understanding. If a transmission path can meet the traffic requirement for the bandwidth, the latency, and the packet loss rate, the transmission path is selected as the first transmission path. If only the requirement for the bandwidth and the latency can be met, and a priority of at least one of the bandwidth and the latency is higher than that of the packet loss rate, a transmission path that can meet the bandwidth and the latency may also be selected as the first transmission path. Similarly, if the requirement for the bandwidth and the packet loss rate can be met, or the requirement for the latency and the packet loss rate can be met, and a priority of either of the two is higher than that of the third attribute whose requirement cannot be met, the transmission path that can meet the requirement for the two may be selected as the first transmission path. If only the requirement for the bandwidth can be met, and a priority of the bandwidth is higher than a priority of the latency and a priority of the packet loss rate, a transmission path that meets the requirement for the bandwidth but does not meet the requirement for the latency and the packet loss rate may alternatively be selected as the first transmission path. Certainly, the control device may also be requested to reconfigure a transmission path that meets the requirement for the bandwidth, the latency, and the packet loss rate.

### (13) Bandwidth, jitter, and packet loss rate

For a combination requirement for a bandwidth, a jitter, and a packet loss rate, refer to a combination of the foregoing (1)+(3)+(4) for understanding. If a transmission path can meet the traffic requirement for the bandwidth, the jitter, and the packet loss rate, the transmission path is selected as the first transmission path. If only the requirement for the bandwidth and the jitter can be met, and a priority of at least one of the bandwidth and the jitter is higher than that of the packet loss rate, a transmission path that can meet the requirement for the bandwidth and the jitter may also be selected as the first transmission path. Similarly, if the requirement for the bandwidth and the packet loss rate can be met, or the requirement for the jitter and the packet loss rate can be met, and a priority of either of the two is higher than that of the third attribute whose requirement cannot be met, the transmission path that can meet the requirement for the two may be selected as the first transmission path. If only the requirement for the bandwidth can be met, and a priority of the bandwidth is higher than a priority of the jitter and a priority of the packet loss rate, a transmission path that meets the requirement for the bandwidth but does not meet the requirement for the jitter and the packet loss rate may alternatively be selected as the first transmission path. Certainly, the control device may also be requested to reconfigure a transmission path meets the requirement for the bandwidth, the jitter, and the packet loss rate.

### (14) Latency, jitter, and packet loss rate

For a combination requirement for a latency, a jitter, and a packet loss rate, refer to a combination of the foregoing (2)+(3)+(4) for understanding. If a transmission path can meet the traffic requirement for the latency, the jitter, and the packet loss rate, the transmission path is selected as the first transmission path. If only the requirement for the latency and the jitter can be met, and a priority of at least one of the latency and the jitter is higher than that of the packet loss rate, a transmission path that can meet the requirement for the latency and the jitter may also be selected as the first transmission path. Similarly, if the requirement for the latency and the packet loss rate can be met, or the requirement for the jitter and the packet loss rate can be met, and a priority of either of the two is higher than that of the third attribute whose requirement cannot be met, the transmission path that can meet the requirement for the two may be selected as the first transmission path. If only the requirement for the latency can be met, and a priority of the latency is higher than a priority of the jitter and a priority of the packet loss rate, a transmission path that meets the requirement for the latency but does not meet the requirement for jitter and the packet loss rate may alternatively be selected as the first transmission path. Certainly, the control device may also be requested to reconfigure a transmission path meets the requirement for the latency, the jitter, and the packet loss rate.

### (15) Bandwidth, latency, jitter, and packet loss rate

For a combination requirement for a bandwidth, a latency, a jitter, and a packet loss rate, refer to a combination of the foregoing (1)+(2)+(3)+(4) for understanding. If a transmission path can meet the traffic requirement for the bandwidth, the latency, the jitter, and the packet loss rate, the transmission path is selected as the first transmission path. If only the requirement for the bandwidth, the latency, and the jitter can be met, and a priority of at lease one of the bandwidth, the latency, and the jitter is higher than a priority of the packet loss rate, a transmission path that meets the requirement for the bandwidth, the latency, and the jitter may alternatively be selected as the first transmission path. Similarly, if the requirement for the bandwidth, the latency, and the packet loss rate can be met, or the requirement for the bandwidth, the jitter, and the packet loss rate can be met, and a priority of one of the three is higher than the fourth attribute whose requirement cannot be met, a transmission path that can meet the three may be selected as the first transmission path. If only the requirement for two attributes can be met, and a priority of at least one of the two attributes is higher than a priority of the remaining two attributes, where the requirement for the remaining two attributes cannot be met, a transmission path that can meet the requirement for the two attributes may alternatively be selected as the first transmission path. If only the requirement for one attribute can be met, and a priority of the one attribute whose requirement can be met is higher than the remaining three attributes whose requirements cannot be met, a transmission path that can meet the requirement for the one attribute may alternatively be selected as the first transmission path. Certainly, the control device may also be requested to reconfigure a transmission path that meets the requirement for the bandwidth, the latency, the jitter, and the packet loss rate.

The foregoing fifteen cases do not enumerate all possible cases. It should be noted that there may be a plurality of measurement manners for selecting the first transmission path, provided that a specified requirement can be met.

103: The first forwarding device sends the service packet to a second forwarding device through the first transmission path.

After receiving the service packet, the second forwarding device sends the service packet to a receiving device.

In the solution provided in this embodiment of this application, attributes of a path and a quantitative value corresponding to each attribute may be provided according to an extended segment routing policy, so that an appropriate path that meets a traffic requirement can be accurately selected.

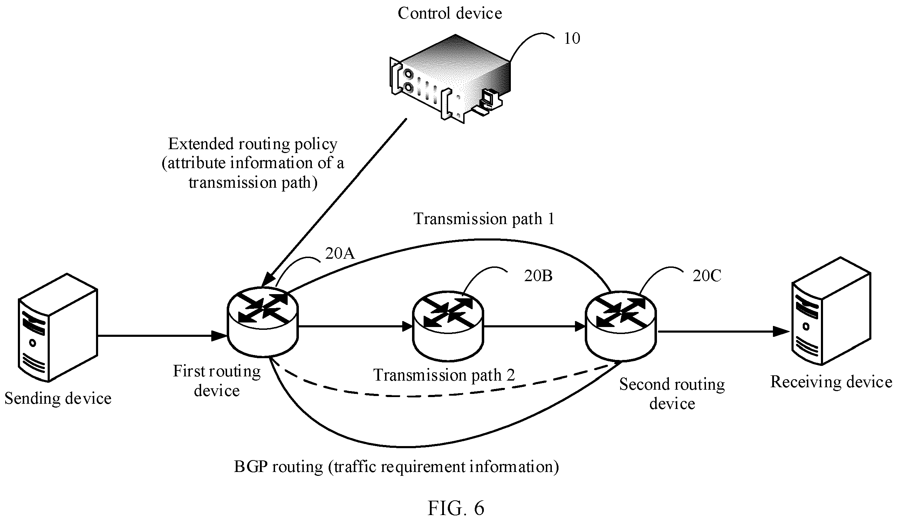

In another scenario, the second forwarding device 20C in FIG. 3 transfers the traffic requirement information to the first forwarding device 20A. The scenario is applicable to a VPN scenario, and may be understood with reference to FIG. 6.

In FIG. 6, in this scenario, the first forwarding device 20A receives traffic requirement information of a virtual private network VPN sent by the second forwarding device 20C, where the second forwarding device is a last forwarding device on the at least one transmission path.

The first forwarding device 20A receives the traffic requirement information sent by the second forwarding device, where the traffic requirement information may be sent by the second forwarding device according to an extended Border Gateway Protocol BGP, and the traffic requirement information refers to the traffic requirement information of the VPN. The first forwarding device 20A determines the first transmission path based on the traffic requirement information of the VPN and attribute information of each transmission path, and after receiving a VPN service packet, the first forwarding device 20A may transmit the VPN service packet through the first transmission path.

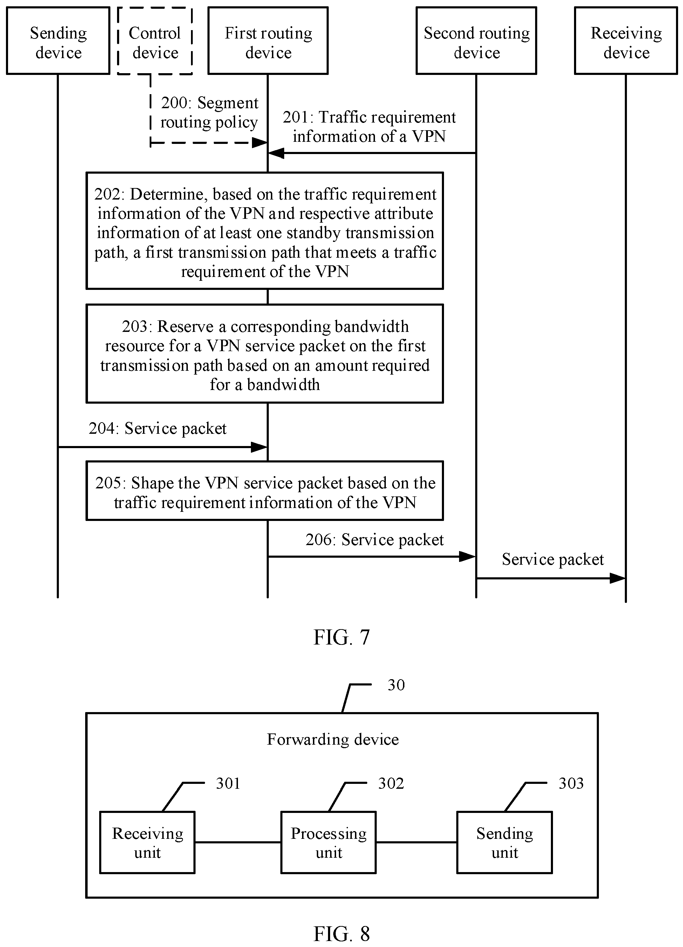

An embodiment of a service packet transmission method in this scenario may be understood with reference to FIG. 7.

As shown in FIG. 7, another embodiment of the service packet transmission method provided in this embodiment of this application may include the following steps.

201: A first forwarding device receives traffic requirement information of a virtual private network VPN sent by a second forwarding device.

The second forwarding device is a last forwarding device on at least one transmission path.

Traffic requirement information of a VPN is generally configured by a user by using a receiving device, then the receiving device sends the traffic requirement information of the VPN configured by the user to the second forwarding device, and the second forwarding device configures the traffic requirement information of the VPN in an extended BGP packet and sends the extended BGP packet to the first forwarding device. The traffic requirement information of the VPN may be configured in an idle field or a newly added field in the BGP packet. For a configuration principle, refer to the foregoing principle for configuring the attribute information of the transmission path in the BGP for understanding. Details are not described herein again.

Before step 201, there may be step 200: A control device delivers a segment routing policy to the first forwarding device, where the segment routing policy includes attribute information of each transmission path.

Step 200 is performed after the attribute information of each transmission path is collected, or is performed until the attribute information of each transmission path is updated, or is performed periodically.

202: The first forwarding device determines, based on the traffic requirement information of the VPN and respective attribute information of the at least one transmission path, a first transmission path that meets a traffic requirement of the VPN.

For this step, refer to step 102 in the foregoing embodiment for understanding. Details are not described herein again.

203: When the traffic requirement information of the VPN includes a bandwidth and an amount required for the bandwidth, the first forwarding device reserves a corresponding bandwidth resource for a VPN service packet on the first transmission path based on the amount required for the bandwidth.

A VPN resource is a dedicated resource. After being allocated to the VPN service packet, other service packets cannot use the resource. For example, a requirement of a VPN for a bandwidth is 3G, a quantitative value of a bandwidth of a transmission path 1 is 5G, and a quantitative value of a bandwidth of a transmission path 2 is 10G. Both the transmission path 1 and the transmission path 2 can meet the requirement of the VPN for the bandwidth. If the transmission path 1 is selected as the first transmission path, a VPN dedicated bandwidth of 3G needs to be subtracted on the transmission path 1. In this case, a remaining bandwidth of the transmission path 1 becomes 2G, and a remaining bandwidth of the transmission path 2 is still 10G.

Even when no VPN service packet arrives, and another service packet arrives, if the service packet requires a bandwidth of 3G, because the transmission path 1 has only the remaining bandwidth of 2G, a requirement of the service packet for the bandwidth of 3G cannot be met.

204: The first forwarding device receives the service packet.

The service packet carries VPN-related information, for example, carries a dedicated VPN identifier; or is of a device that belongs to the VPN. For example, the first forwarding device may determine, based on an identifier of a receiving device that belongs to the VPN, whether the receiving device belongs to the VPN, and determine whether the service packet is a VPN service packet.

205: When the service packet is the VPN service packet, the first forwarding device shapes the VPN service packet based on the traffic requirement information of the VPN.

When the VPN service packet arrives, because the VPN resource is limited, when the requirement of the VPN service packet for the bandwidth exceeds load of the VPN, the VPN service packet needs to be shaped. There may be a plurality of shaping methods, and a common method is token bucket shaping. The VPN service packet may be shaped through removing unnecessary data to an extent that the VPN resource meets a requirement of a shaped VPN service packet. For example, a VPN service packet of 4G is shaped to a VPN service packet of 3G, and a reserved VPN resource of a 3G bandwidth is used for transmission.

Certainly, step 205 is optional. If the VPN service packet does not exceed the resource reserved for the VPN, the foregoing shaping process may not be performed, and the reserved resource may be directly used for transmission.

206: The first forwarding device sends a shaped VPN service packet to the second forwarding device through the first transmission path.

After receiving the service packet, the second forwarding device sends the service packet to the receiving device.

In the solution provided in this embodiment of this application, attributes of a path and a quantitative value corresponding to each attribute may be provided according to an extended segment routing policy, so that an appropriate path that meets a traffic requirement can be accurately selected. A dedicated resource may be further reserved for a VPN, so that when a VPN service packet is transmitted, the reserved resource may be used for transmission.

The foregoing embodiment provides different implementations of a service packet transmission method. The following provides a forwarding device 30. In FIG. 8, the forwarding device 30 is configured to perform steps performed by the first forwarding device in the foregoing embodiments. For specific understanding of performing of the steps and corresponding beneficial effects, refer to the foregoing corresponding embodiments. Details are not described herein again. The forwarding device 30 may include:
a receiving unit 301, configured to receive a service packet, where for a specific implementation of the function, refer to step 101 in the embodiment shown in FIG. 5 and step 204 in the embodiment shown in FIG. 7;
a processing unit 302, configured to: obtain traffic requirement information, where the traffic requirement information includes a traffic-related attribute and an amount required for the attribute; and determine, based on the traffic requirement information and respective attribute information of at least two transmission paths, a first transmission path that meets a traffic requirement, where the respective attribute information of the at least two transmission paths is obtained from a control device, and the attribute information of each of the at least two transmission paths includes an attribute used to indicate a transmission capability of the transmission path, and a quantitative value corresponding to the attribute, where for specific implementation of the function, refer to step 102 in the embodiment shown in FIG. 5 and step 202 in the embodiment shown in FIG. 7; and
a sending unit 303, configured to send the service packet to a second forwarding device through the first transmission path, where for specific implementation of the function, refer to step 103 in the embodiment shown in FIG. 5 and step 206 in the embodiment shown in FIG. 7.

In a specific implementation, the processing unit 302 is configured to obtain the traffic requirement information from the service packet. For specific implementation of the function, refer to step 101 in the embodiment shown in FIG. 5.

In a specific implementation, the receiving unit 301 is configured to receive traffic requirement information of a virtual private network VPN sent by the second forwarding device, where the second forwarding device is a last forwarding device on the at least two transmission paths. For specific implementation of the function, refer to step 201 in the embodiment shown in FIG. 7.

In a specific implementation, the processing unit 302 is further configured to: when the traffic requirement information of the VPN includes a bandwidth and an amount required for the bandwidth, reserve a corresponding bandwidth resource for a VPN service packet on the first transmission path based on the amount required for the bandwidth. For specific implementation of the function, refer to step 203 in the embodiment shown in FIG. 7.

In a specific implementation, the traffic requirement information of the VPN is included in an extended Border Gateway Protocol BGP packet.

In a specific implementation, the respective attribute information of the at least two transmission paths is carried in a segmented routing policy delivered by the control device, and the segmented routing policy further includes a guarantee type of the quantitative value corresponding to the attribute, and the guarantee type is used to indicate a trustworthiness degree of the quantitative value corresponding to the attribute. The processing unit 302 is configured to determine, based on the traffic requirement information, the respective attribute information of the at least two transmission paths, and the guarantee type, the first transmission path that meets the traffic requirement. For specific implementation of the function, refer to corresponding descriptions in step 102 in the embodiment shown in FIG. 5.

In a specific implementation, the processing unit 302 is configured to:
determine, based on the traffic requirement information and the respective attribute information of the at least two transmission paths, at least two transmission paths that meet the traffic requirement; determine, based on the guarantee type, the first transmission path from the at least two transmission paths that meet the traffic requirement, where a trustworthiness degree of a quantitative value of an attribute of the first transmission path is greater than a trustworthiness degree of a quantitative value of a remaining transmission path in the at least two transmission paths that meet the traffic requirement. For specific implementation of the function, refer to corresponding descriptions in step 102 in the embodiment shown in FIG. 5.

In a specific implementation, the traffic-related attribute includes a first attribute and a second attribute, and a priority of the first attribute is higher than a priority of the second attribute. The processing unit 302 is configured to: when determining that there is no transmission path in the at least two transmission paths that meets an amount required for the first attribute and an amount required for the second attribute, determine a transmission path that meets the amount required for the first attribute from the at least two transmission paths as the first transmission path. For specific implementation of the function, refer to corresponding descriptions in step 102 in the embodiment shown in FIG. 5.

In a specific implementation, the quantitative value includes a single value or a value range, and/or the amount required includes a single value or a value range.

In a specific implementation, the processing unit 302 is further configured to: when the traffic-related attribute includes a bandwidth, determine, from the at least two transmission paths based on an amount required for the bandwidth, a transmission path whose quantitative value of a bandwidth is not less than the amount required for the bandwidth as the first transmission path. For specific implementation of the function, refer to (1) in the fifteen cases in step 102 in the embodiment shown in FIG. 5.

In a specific implementation, the processing unit 302 is further configured to: when the traffic-related attribute includes a latency, determine, from the at least two transmission paths based on an amount required for the latency, a transmission path whose quantitative value of a latency is not greater than the amount required for the latency as the first transmission path. For specific implementation of the function, refer to (2) in the fifteen cases in step 102 in the embodiment shown in FIG. 5.

In a specific implementation, the processing unit 302 is further configured to: when the traffic-related attribute includes a jitter, determine, from the at least two transmission paths based on an amount required for the jitter, a transmission path whose quantitative value of a jitter is not greater than the amount required for the jitter as the first transmission path. For specific implementation of the function, refer to (3) in the fifteen cases in step 102 in the embodiment shown in FIG. 5.

In a specific implementation, the processing unit 302 is further configured to: when the traffic-related attribute includes a packet loss rate, determine, from the at least two transmission paths based on an amount required for the packet loss rate, a transmission path whose quantitative value of a packet loss rate is not greater than the amount required for the packet loss rate as the first transmission path. For specific implementation of the function, refer to (4) in the fifteen cases in step 102 in the embodiment shown in FIG. 5.

In a specific implementation, the processing unit 302 is further configured to: if it is determined that the service packet is a VPN service packet, shape the VPN service packet based on the traffic requirement information of the VPN. For specific implementation of the function, refer to step 205 in the embodiment shown in FIG. 7.

The sending unit 303 is configured to send a shaped VPN service packet to a second forwarding device through the first transmission path. For specific implementation of the function, refer to step 206 in the embodiment shown in FIG. 7.

In a specific implementation, the extended segment routing policy is delivered according to an extended Border Gateway Protocol BGP, a Path Computation Element Protocol PCEP, or a Network Configuration Protocol NETCONF.

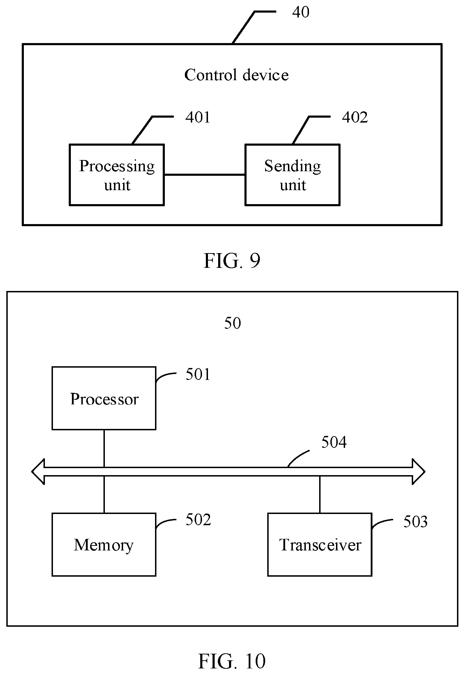

As shown in FIG. 9, an embodiment of this application further provides a control device 40. The control device 40 may interact with the forwarding device 30 in the embodiment shown in FIG. 8. The control device 40 is configured to perform a function performed by the control device in the routing system shown in FIG. 1 to FIG. 3. The control device 40 may include:
a processing unit 401, configured to determine a segment routing policy, where the segment routing policy includes respective attribute information of at least two transmission paths, and the attribute information of each of the at least two transmission paths includes an attribute used to indicate a transmission capability of the transmission path and a quantitative value corresponding to the attribute, where for specific implementation of this function, refer to the process in which the control device collects attribute information of each transmission path in the embodiments shown in FIG. 1 to FIG. 3; and
a sending unit 402, configured to send the segment routing policy to the first forwarding device, where the segment routing policy is used by the first forwarding device to determine, based on the traffic requirement information and the respective attribute information of the transmission path, a first transmission path that meets a traffic requirement and that is used to transmit a service packet, and the traffic requirement information includes a traffic-related attribute, and an amount required for the attribute, where for specific implementation of the function, refer to the process in which the control device sends the extended segment routing policy in the embodiment shown in FIG. 3.

In a specific implementation, the processing unit 401 is configured to collect a quantitative value of each attribute for different attribute information of each transmission path according to a collection policy of a guarantee type corresponding to the attribute information. For specific implementation of this function, refer to the process in which the control device collects attribute information of each transmission path in the embodiments shown in FIG. 1 to FIG. 3.

In a specific implementation, the extended segment routing policy is delivered according to an extended Border Gateway Protocol BGP, a Path Computation Element Protocol PCEP, or a Network Configuration Protocol NETCONF.

Refer to FIG. 10. An embodiment of this application provides a forwarding device 50. The forwarding device 50 includes a processor 501, a memory 502, and a transceiver 503, and the processor 501 and the memory 502 are connected to the transceiver 503.

The forwarding device 50 is a device of a hardware structure, and may be configured to implement functional modules in the forwarding device shown in FIG. 8. For example, a person skilled in the art may think of that the processing unit 302 in the forwarding device 30 shown in FIG. 8 may be implemented by invoking code in the memory 502 by the processor 501. The receiving unit 301 and the sending unit 303 in the forwarding device 40 shown in FIG. 8 may be implemented by using the transceiver 503.

Optionally, the processor 501 may be one or more central processing units (central processing unit, CPU), a microprocessor, an application-specific integrated circuit (application-specific integrated circuit, ASIC), or one or more integrated circuits configured to control program execution of the solutions in this application.

The transceiver 503 is configured to receive a service packet. For specific implementation of the function, refer to step 101 in the embodiment shown in FIG. 5 and step 204 in the embodiment shown in FIG. 7.

The processor 501 is configured to: obtain traffic requirement information, where the traffic requirement information includes a traffic-related attribute and an amount required for the attribute; and determine, based on the traffic requirement information and respective attribute information of at least two transmission paths, a first transmission path that meets a traffic requirement, where the respective attribute information of the at least two transmission paths is obtained from a control device, and the attribute information of each of the at least two transmission paths includes an attribute used to indicate a transmission capability of the transmission path, and a quantitative value corresponding to the attribute, where for specific implementation of the function, refer to step 102 in the embodiment shown in FIG. 5 and step 202 in the embodiment shown in FIG. 7.

The transceiver 503 is configured to send the service packet to a second forwarding device through the first transmission path. For specific implementation of the function, refer to step 103 in the embodiment shown in FIG. 5 and step 206 in the embodiment shown in FIG. 7.

The processor 501, the memory 502, and the transceiver 503 are connected through a bus 504. The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

In a specific embodiment, the transceiver 503 is configured to receive the traffic requirement information. For details, refer to step 201 in the embodiment shown in FIG. 7.

The transceiver 503 is further configured to send a VPN service packet to the second forwarding device through the first transmission path. For specific implementation of the function, refer to step 206 in the embodiment shown in FIG. 7.

For other functions of the processor 501, refer to corresponding functions performed by the processing unit 302 in the embodiment shown in FIG. 8.

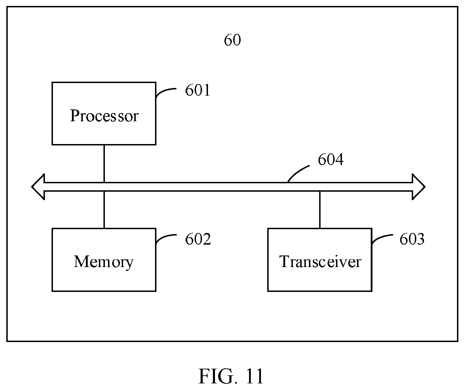

Refer to FIG. 11. An embodiment of this application provides a control device 60. The control device 60 includes a processor 601, a memory 602, and a transceiver 603, and the processor 601 and the memory 602 are connected to the transceiver 603.

The control device 60 is an apparatus of a hardware structure, and may be configured to implement functional modules in the control device shown in FIG. 9. For example, a person skilled in the art may think of that the processing unit 401 in the control device 40 shown in FIG. 9 may be implemented by invoking code in the memory 602 by the processor 601. The sending unit 402 in the control device 50 shown in FIG. 9 may be implemented by using the transceiver 603.

Optionally, the processor 601 may be one or more central processing units (central processing unit, CPU), a microprocessor, an application-specific integrated circuit (application-specific integrated circuit, ASIC), or one or more integrated circuits configured to control program execution of the solutions in this application.

The processor 601 is configured to execute instructions in the memory 602. In a specific embodiment, the processor 601 is configured to determine a segment routing policy, where the segment routing policy includes respective attribute information of the at least two transmission paths, and the attribute information of each of the at least two transmission paths includes an attribute used to indicate a transmission capability of the transmission path and a quantitative value corresponding to the attribute. For specific implementation, refer to the process in which the control device collects attribute information of each transmission path in the embodiments shown in FIG. 1 to FIG. 3.

The transceiver 603 is configured to send the segment routing policy to the first forwarding device, where the segment routing policy is used by the first forwarding device to determine, based on the traffic requirement information and the respective attribute information of the transmission path, a first transmission path that meets a traffic requirement and that is used to transmit a service packet, and the traffic requirement information includes a traffic-related attribute, and an amount required for the attribute. For specific implementation, refer to the process in which the control device sends the extended segment routing policy in the embodiment shown in FIG. 3.

The processor 601, the memory 602, and the transceiver 603 are connected through a bus 604. The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

For other functions of the processor 601, refer to corresponding functions performed by the processing unit 401 in the embodiment shown in FIG. 9.

This application further provides a chip system. The chip system includes a processor, configured to support the foregoing forwarding device or control device to implement functions related to the forwarding device or control device, for example, receiving or processing the packet and/or information in the foregoing method embodiments. In a possible design, the chip system further includes a memory. The memory is configured to store program instructions and data that are necessary for a computer device. The chip system may include a chip, or may include a chip and another discrete component.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or the functions according to the embodiments of this application are generated. The computer may be a general purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

It may be clearly understood by a person skilled in the art that, for purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, and an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make replacements to some technical features thereof, without departing from the scope of the technical solutions of the embodiments of this application.

## Claims

1. A service packet transmission method, applied to a communication network, wherein the communication network comprises a control device (10), a first forwarding device (20A), and a second forwarding device, there are at least two transmission paths between the first forwarding device (20A) and the second forwarding device (20C), the first forwarding device (20A) is a start forwarding device on the transmission path, the method is performed by the first forwarding device (20A), and the method comprises:
receiving, by the first forwarding device (20A), a segment routing policy comprising respective attribute information of the at least two transmission paths from the control device (10), wherein the attribute information of each of the at least two transmission paths comprises an attribute used to indicate a transmission capability of the transmission path, and a quantitative value corresponding to the attribute;
receiving, by the first forwarding device (20A), a service packet;
obtaining, by the first forwarding device (20A), traffic requirement information, wherein the traffic requirement information comprises a traffic-related attribute and an amount required for the traffic-related attribute;
determining, by the first forwarding device (20A) based on the traffic requirement information and the respective attribute information of the at least two transmission paths, a first transmission path that meets a traffic requirement; and
sending, by the first forwarding device (20A), the service packet to the second forwarding device (20C) through the first transmission path.

2. The method according to claim 1, wherein the obtaining, by the first forwarding device (20A), traffic requirement information comprises:
obtaining, by the first forwarding device (20A), the traffic requirement information from the service packet.

3. The method according to claim 1, wherein the obtaining, by the first forwarding device (20A), traffic requirement information comprises:
receiving, by the first forwarding device (20A), traffic requirement information of a virtual private network, VPN, sent by the second forwarding device (20C), wherein the second forwarding device (20C) is a last forwarding device on the at least two transmission paths.

4. The method according to claim 3, wherein when the traffic requirement information of the VPN comprises a bandwidth and an amount required for the bandwidth, after the determining a first transmission path that meets a traffic requirement, the method further comprises:
reserving, by the first forwarding device (20A), a corresponding bandwidth resource for a VPN service packet on the first transmission path based on the amount required for the bandwidth.

5. The method according to claim 3 or 4, wherein the traffic requirement information of the VPN is comprised in a Border Gateway Protocol, BGP, packet.

6. The method according to any one of claims 1 to 5, wherein the respective attribute information of the at least two transmission paths is carried in a segment routing policy delivered by the control device (10);
the segment routing policy further comprises a guarantee type of the quantitative value corresponding to the attribute, and the guarantee type is used to indicate a trustworthiness degree of the quantitative value corresponding to the attribute; and
the determining, by the first forwarding device (20A) based on the traffic requirement information and respective attribute information of the at least two transmission paths, a first transmission path that meets a traffic requirement comprises:
determining, by the first forwarding device (20A) based on the traffic requirement information, the respective attribute information of the at least two transmission paths, and the guarantee type, the first transmission path that meets the traffic requirement.

7. The method according to claim 6, wherein the determining, by the first forwarding device (20A) based on the traffic requirement information, the respective attribute information of the at least two transmission paths, and the guarantee type, the first transmission path that meets the traffic requirement comprises:
determining, by the first forwarding device (20A) based on the traffic requirement information and the respective attribute information of the at least two transmission paths, at least two transmission paths that meet the traffic requirement; and
determining, by the first forwarding device (20A) based on the guarantee type, the first transmission path from the at least two transmission paths that meet the traffic requirement, wherein a trustworthiness degree of a quantitative value of an attribute of the first transmission path is greater than a trustworthiness degree of a quantitative value of a remaining transmission path in the at least two transmission paths that meet the traffic requirement.

8. The method according to any one of claims 1 to 5, wherein the traffic-related attribute comprises a first attribute and a second attribute, and a priority of the first attribute is higher than a priority of the second attribute; and
the determining, by the first forwarding device (20A) based on the traffic requirement information and respective attribute information of the at least two transmission paths, a first transmission path that meets a traffic requirement comprises:
when determining that there is no transmission path in the at least two transmission paths that meets an amount required for the first attribute and an amount required for the second attribute, determining, by the first forwarding device (20A), a transmission path that meets the amount required for the first attribute from the at least two transmission paths as the first transmission path.

9. The method according to any one of claims 1 to 8, wherein the quantitative value comprises a single value or a value range, and/or the amount required comprises a single value or a value range.

10. The method according to any one of claims 1 to 5, wherein when the traffic-related attribute comprises a bandwidth,
the determining, by the first forwarding device (20A) based on the traffic requirement information and respective attribute information of the at least two transmission paths, a first transmission path that meets a traffic requirement comprises:
determining, by the first forwarding device (20A) from the at least two transmission paths based on an amount required for the bandwidth, a transmission path whose quantitative value of a bandwidth is not less than the amount required for the bandwidth as the first transmission path.

11. The method according to any one of claims 1 to 5, wherein when the traffic-related attribute comprises a latency,
the determining, by the first forwarding device (20A) based on the traffic requirement information and respective attribute information of the at least two transmission paths, a first transmission path that meets a traffic requirement comprises:
determining, by the first forwarding device (20A) from the at least two transmission paths based on an amount required for the latency, a transmission path whose quantitative value of a latency is not greater than the amount required for the latency as the first transmission path.

12. A computer-readable storage medium comprising instructions which, when executed by a computer, cause the computer to carry out the method of any one of claims 1 to 11.

13. A first forwarding device (20A) applied to a communication network, wherein the first forwarding device (20A) is configured to implement the method according to any one of claims 1 to 11.

14. A routing system comprising:
a first forwarding device (20A) according to claim 13;
a second forwarding device (20C); and
a control device (10), wherein the control device (10) is configured to:
determine a segment routing policy, wherein the segment routing policy comprises respective attribute information of at least two transmission paths between the first forwarding device (20A) and the second forwarding device (20C), and the attribute information of each of the at least two transmission paths comprises an attribute used to indicate a transmission capability of the transmission path and a quantitative value corresponding to the attribute; and
send the segment routing policy to the first forwarding device.

## Patentansprüche

1. Verfahren zur Dienstpaketübertragung, das auf ein Kommunikationsnetzwerk angewendet wird, wobei das Kommunikationsnetzwerk eine Steuervorrichtung (10), eine erste Weiterleitungsvorrichtung (20A) und eine zweite Weiterleitungsvorrichtung umfasst, wobei zwischen der ersten Weiterleitungsvorrichtung (20A) und der zweiten Weiterleitungsvorrichtung (20C) mindestens zwei Übertragungspfade vorhanden sind, die erste Weiterleitungsvorrichtung (20A) eine Start-Weiterleitungsvorrichtung auf dem Übertragungspfad ist, das Verfahren von der ersten Weiterleitungsvorrichtung (20A) durchgeführt wird und das Verfahren Folgendes umfasst:
Empfangen, durch die erste Weiterleitungsvorrichtung (20A), einer Segmentroutingrichtlinie, die jeweilige Attributinformationen von den mindestens zwei Übertragungspfaden umfasst, von der Steuervorrichtung (10), wobei die Attributinformationen jedes der mindestens zwei Übertragungspfade ein Attribut umfassen, das verwendet wird, um eine Übertragungsfähigkeit des Übertragungspfads und einen quantitativen Wert, der dem Attribut entspricht, anzuzeigen;
Empfangen, durch die erste Weiterleitungsvorrichtung (20A), eines Dienstpakets;
Erlangen, durch die erste Weiterleitungsvorrichtung (20A), von Verkehrsanforderungsinformationen, wobei die Verkehrsanforderungsinformationen ein verkehrsbezogenes Attribut und eine Menge, die für das verkehrsbezogene Attribut erforderlich ist, umfassen;
Bestimmen, durch die erste Weiterleitungsvorrichtung (20A) basierend auf den Verkehrsanforderungsinformationen und den jeweiligen Attributinformationen von den mindestens zwei Übertragungspfaden, eines ersten Übertragungspfads, der eine Verkehrsanforderung erfüllt; und
Senden, durch die erste Weiterleitungsvorrichtung (20A), des Dienstpakets an die zweite Weiterleitungsvorrichtung (20C) über den ersten Übertragungspfad.

2. Verfahren nach Anspruch 1, wobei das Erlangen, durch die erste Weiterleitungsvorrichtung (20A), von Verkehrsanforderungsinformationen Folgendes umfasst:
Erlangen, durch die erste Weiterleitungsvorrichtung (20A), der Verkehrsanforderungsinformationen aus dem Dienstpaket.

3. Verfahren nach Anspruch 1, wobei das Erlangen, durch die erste Weiterleitungsvorrichtung (20A), von Verkehrsanforderungsinformationen Folgendes umfasst:
Empfangen, durch die erste Weiterleitungsvorrichtung (20A), von Verkehrsanforderungsinformationen eines virtuellen privaten Netzwerks, VPN, die von der zweiten Weiterleitungsvorrichtung (20C) gesendet werden, wobei die zweite Weiterleitungsvorrichtung (20C) eine letzte Weiterleitungsvorrichtung auf den mindestens zwei Übertragungspfaden ist.

4. Verfahren nach Anspruch 3, wobei, wenn die Verkehrsanforderungsinformationen des VPN eine Bandbreite und eine Menge, die für die Bandbreite erforderlich ist, umfassen, das Verfahren nach dem Bestimmen eines ersten Übertragungspfads, der eine Verkehrsanforderung erfüllt, ferner Folgendes umfasst: Reservieren, durch die erste Weiterleitungsvorrichtung (20A), einer entsprechenden Bandbreitenressource für ein VPN-Dienstpaket auf dem ersten Übertragungspfad, basierend auf der für die Bandbreite erforderlichen Menge.

5. Verfahren nach Anspruch 3 oder 4, wobei die Verkehrsanforderungsinformationen des VPN in einem Border-Gateway-Protocol-Paket, BGP-Paket, umfasst sind.

6. Verfahren nach einem der Ansprüche 1 bis 5, wobei die jeweiligen Attributinformationen der mindestens zwei Übertragungspfade in einer Segmentroutingrichtlinie, die durch die Steuervorrichtung (10) bereitgestellt wird, enthalten sind; die Segmentroutingrichtlinie ferner einen Garantietyp des quantitativen Werts, der dem Attribut entspricht, umfasst und der Garantietyp dazu verwendet wird, um einen Vertrauenswürdigkeitsgrad des quantitativen Werts, der dem Attribut entspricht, anzuzeigen; und
das Bestimmen, durch die erste Weiterleitungsvorrichtung (20A) basierend auf den Verkehrsanforderungsinformationen und jeweiligen Attributinformationen der mindestens zwei Übertragungspfade, eines ersten Übertragungspfads, der eine Verkehrsanforderung erfüllt, Folgendes umfasst:
Bestimmen, durch die erste Weiterleitungsvorrichtung (20A) basierend auf den Verkehrsanforderungsinformationen, den jeweiligen Attributinformationen der mindestens zwei Übertragungspfade und dem Garantietyp, des ersten Übertragungspfads, der die Verkehrsanforderung erfüllt.

7. Verfahren nach Anspruch 6, wobei das Bestimmen, durch die erste Weiterleitungsvorrichtung (20A) basierend auf den Verkehrsanforderungsinformationen, den jeweiligen Attributinformationen der mindestens zwei Übertragungspfade und dem Garantietyp, des ersten Übertragungspfads, der die Verkehrsanforderung erfüllt, Folgendes umfasst:
Bestimmen, durch die erste Weiterleitungsvorrichtung (20A) basierend auf den Verkehrsanforderungsinformationen und den jeweiligen Attributinformationen der mindestens zwei Übertragungspfade, von mindestens zwei Übertragungspfaden, welche die Verkehrsanforderung erfüllen; und
Bestimmen, durch die erste Weiterleitungsvorrichtung (20A) basierend auf dem Garantietyp, des ersten Übertragungspfads aus den mindestens zwei Übertragungspfaden, welche die Verkehrsanforderung erfüllen, wobei ein Vertrauenswürdigkeitsgrad eines quantitativen Werts eines Attributs des ersten Übertragungspfads größer als ein Vertrauenswürdigkeitsgrad eines quantitativen Werts eines verbleibenden Übertragungspfads in den mindestens zwei Übertragungspfaden, welche die Verkehrsanforderung erfüllen, ist.

8. Verfahren nach einem der Ansprüche 1 bis 5, wobei das verkehrsbezogene Attribut ein erstes Attribut und ein zweites Attribut umfasst und eine Priorität des ersten Attributs höher als eine Priorität des zweiten Attributs ist; und
das Bestimmen, durch die erste Weiterleitungsvorrichtung (20A) basierend auf den Verkehrsanforderungsinformationen und jeweiligen Attributinformationen der mindestens zwei Übertragungspfade, eines ersten Übertragungspfads, der eine Verkehrsanforderung erfüllt, Folgendes umfasst:
wenn bestimmt wird, dass kein Übertragungspfad in den mindestens zwei Übertragungspfaden vorhanden ist, der eine Menge, die für das erste Attribut erforderlich ist, und eine Menge, die für das zweite Attribut erforderlich ist, erfüllt, Bestimmen, durch die erste Weiterleitungsvorrichtung (20A), eines Übertragungspfads aus den mindestens zwei Übertragungspfaden, der die Menge, die für das erste Attribut erforderlich ist, erfüllt, als den ersten Übertragungspfad.

9. Verfahren nach einem der Ansprüche 1 bis 8, wobei der quantitative Wert einen einzelnen Wert oder einen Wertebereich umfasst und/oder die erforderliche Menge einen einzelnen Wert oder einen Wertebereich umfasst.

10. Verfahren nach einem der Ansprüche 1 bis 5, wobei, wenn das verkehrsbezogene Attribut eine Bandbreite umfasst,
das Bestimmen, durch die erste Weiterleitungsvorrichtung (20A) basierend auf den Verkehrsanforderungsinformationen und jeweiligen Attributinformationen der mindestens zwei Übertragungspfade, eines ersten Übertragungspfads, der eine Verkehrsanforderung erfüllt, Folgendes umfasst:
Bestimmen, durch die erste Weiterleitungsvorrichtung (20A), aus den mindestens zwei Übertragungspfaden basierend auf einer Menge, die für die Bandbreite erforderlich ist, eines Übertragungspfades, dessen quantitativer Wert einer Bandbreite nicht kleiner ist als die Menge, die für die Bandbreite erforderlich ist, als den ersten Übertragungspfad.

11. Verfahren nach einem der Ansprüche 1 bis 5, wobei, wenn das verkehrsbezogene Attribut eine Latenz umfasst,
das Bestimmen, durch die erste Weiterleitungsvorrichtung (20A) basierend auf den Verkehrsanforderungsinformationen und jeweiligen Attributinformationen der mindestens zwei Übertragungspfade, eines ersten Übertragungspfads, der eine Verkehrsanforderung erfüllt, Folgendes umfasst:
Bestimmen, durch die erste Weiterleitungsvorrichtung (20A), aus den mindestens zwei Übertragungspfaden basierend auf einer Menge, die für die Latenz erforderlich ist, eines Übertragungspfades, dessen quantitativer Wert einer Latenz nicht größer ist als die Menge, die für die Latenz erforderlich ist, als den ersten Übertragungspfad.

12. Computerlesbares Speichermedium, das Anweisungen umfasst, die, wenn sie durch einen Computer ausgeführt werden, den Computer veranlassen, das Verfahren nach einem der Ansprüche 1 bis 11 umzusetzen.

13. Erste Weiterleitungsvorrichtung (20A), die auf ein Kommunikationsnetzwerk angewendet wird, wobei die erste Weiterleitungsvorrichtung (20A) dazu konfiguriert ist, das Verfahren nach einem der Ansprüche 1 bis 11 zu implementieren.

14. Routingsystem, umfassend:
eine erste Weiterleitungsvorrichtung (20A) nach Anspruch 13;
eine zweite Weiterleitungsvorrichtung (20C); und
eine Steuervorrichtung (10), wobei die Steuervorrichtung (10) zu Folgendem konfiguriert ist:
Bestimmen einer Segmentroutingrichtlinie, wobei die Segmentroutingrichtlinie jeweilige Attributinformationen von mindestens zwei Übertragungspfaden zwischen der ersten Weiterleitungsvorrichtung (20A) und der zweiten Weiterleitungsvorrichtung (20C) umfasst und die Attributinformationen jedes der mindestens zwei Übertragungspfade ein Attribut umfassen, das verwendet wird, um eine Übertragungsfähigkeit des Übertragungspfads und einen Wert, der dem Attribut entspricht, anzuzeigen; und
Senden der Segmentroutingrichtlinie an die erste Weiterleitungsvorrichtung.

## Revendications

1. Procédé de transmission de paquets de service, appliqué à un réseau de communication, dans lequel le réseau de communication comprend un dispositif de commande (10), un premier dispositif de transfert (20A) et un second dispositif de transfert, il existe au moins deux voies de transmission entre le premier dispositif de transfert (20A) et le second dispositif de transfert (20C), le premier dispositif de transfert (20A) est un dispositif de transfert de départ sur la voie de transmission, le procédé est réalisé par le premier dispositif de transfert (20A), et le procédé comprend :
la réception, par le premier dispositif de transfert (20A), d'une politique de routage de segment comprenant des informations d'attribut respectives des au moins deux chemins de transmission provenant du dispositif de commande (10), dans lequel les informations d'attribut de chacun des au moins deux chemins de transmission comprennent un attribut utilisé pour indiquer une capacité de transmission du chemin de transmission, et une valeur quantitative correspondant à l'attribut ;
la réception, par le premier dispositif de transfert (20A), d'un paquet de service ;
l'obtention, par le premier dispositif de transfert (20A), des informations sur les besoins en trafic, dans lequel les informations sur les besoins en trafic comprennent un attribut lié au trafic et une quantité requise pour l'attribut lié au trafic ;
la détermination, par le premier dispositif de transfert (20A) sur la base des informations sur les besoins en trafic et des informations d'attribut respectives des au moins deux chemins de transmission, d'un premier chemin de transmission qui répond à un besoin de trafic ; et
l'envoi, par le premier dispositif de transfert (20A), de paquets de service au second dispositif de transfert (20C) par le biais du premier chemin de transmission.

2. Procédé selon la revendication 1, dans lequel l'obtention, par le premier dispositif de transfert (20A), des informations sur les besoins en trafic comprend :
l'obtention, par le premier dispositif de transfert (20A), des informations sur les besoins en trafic provenant de paquets de service.

3. Procédé selon la revendication 1, dans lequel l'obtention, par le premier dispositif de transfert (20A), des informations sur les besoins en trafic comprend :
la réception, par le premier dispositif de transfert (20A), des informations sur les besoins en trafic d'un réseau privé virtuel, VPN, envoyées par le second dispositif de transfert (20C), dans lequel le second dispositif de transfert (20C) est un dernier dispositif de transfert sur les au moins deux chemins de transmission.

4. Procédé selon la revendication 3, dans lequel, lorsque les informations sur les besoins en trafic du VPN comprennent une bande passante et une quantité requise pour cette bande passante, après la détermination d'un premier chemin de transmission qui répond à un besoin de trafic, le procédé comprend également :
la réservation, par le premier dispositif de transfert (20A), d'une ressource de bande passante correspondante pour un paquet de service VPN sur le premier chemin de transmission sur la base de la quantité requise pour la bande passante.

5. Procédé selon la revendication 3 ou 4, dans lequel les informations sur les besoins en trafic du VPN sont comprises dans un paquet protocole de passerelle frontière, BGP.

6. Procédé selon l'une quelconque des revendications 1 à 5, dans lequel les informations d'attribut respectives des au moins deux chemins de transmission sont transportées dans une politique de routage de segment délivrée par le dispositif de commande (10) ;
la politique de routage de segment comprend également un type de garantie de la valeur quantitative correspondant à l'attribut, et le type de garantie est utilisé pour indiquer un degré de fiabilité de la valeur quantitative correspondant à l'attribut ; et
la détermination, par le premier dispositif de transfert (20A) sur la base des informations sur les besoins en trafic et des informations d'attribut respectives des au moins deux chemins de transmission, d'un premier chemin de transmission qui répond à un besoin de trafic comprend :
la détermination, par le premier dispositif de transfert (20A) sur la base des informations sur les besoins en trafic, des informations d'attribut respectives des au moins deux chemins de transmission, et du type de garantie, du premier chemin de transmission qui répond à un besoin de trafic.

7. Procédé selon la revendication 6, dans lequel la détermination, par le premier dispositif de transfert (20A) sur la base des informations sur les besoins en trafic, des informations d'attribut respectives des au moins deux chemins de transmission, et du type de garantie, du premier chemin de transmission qui répond à un besoin de trafic comprend :
la détermination, par le premier dispositif de transfert (20A) sur la base des informations sur les besoins en trafic et des informations d'attribut respectives des au moins deux chemins de transmission, d'au moins deux chemins de transmission qui répondent au besoin de trafic ; et
la détermination, par le premier dispositif de transfert (20A) sur la base du type de garantie, du premier chemin de transmission parmi les au moins deux chemins de transmission qui répondent au besoin de trafic, dans lequel un degré de confiance d'une valeur quantitative d'un attribut du premier chemin de transmission est supérieur à un degré de confiance d'une valeur quantitative d'un chemin de transmission restant dans les au moins deux chemins de transmission qui répondent au besoin de trafic.

8. Procédé selon l'une quelconque des revendications 1 à 5, dans lequel l'attribut lié au trafic comprend un premier attribut et un second attribut, et une priorité du premier attribut est supérieure à une priorité du second attribut ; et la détermination, par le premier dispositif de transfert (20A) sur la base des informations sur les besoins en trafic et des informations d'attribut respectives des au moins deux chemins de transmission, d'un premier chemin de transmission qui répond à un besoin de trafic comprend :
lorsqu'il est déterminé qu'il n'existe aucun chemin de transmission parmi les au moins deux chemins de transmission qui répond à une quantité requise pour le premier attribut et à une quantité requise pour le second attribut, la détermination, par le premier dispositif de transfert (20A), d'un chemin de transmission qui répond à la quantité requise pour le premier attribut parmi les au moins deux chemins de transmission en tant que premier chemin de transmission.

9. Procédé selon l'une quelconque des revendications 1 à 8, dans lequel la valeur quantitative comprend une valeur unique ou une plage de valeurs, et/ou la quantité requise comprend une valeur unique ou une plage de valeurs.

10. Procédé selon l'une quelconque des revendications 1 à 5, dans lequel, lorsque l'attribut lié au trafic comprend une bande passante,
la détermination, par le premier dispositif de transfert (20A) sur la base des informations sur les besoins en trafic et des informations d'attribut respectives des au moins deux chemins de transmission, d'un premier chemin de transmission qui répond à un besoin de trafic comprend :
la détermination, par le premier dispositif de transfert (20A) à partir des au moins deux chemins de transmission sur la base d'une quantité requise pour la bande passante, d'un chemin de transmission dont la valeur quantitative d'une bande passante n'est pas inférieure à la quantité requise pour la bande passante en tant que premier chemin de transmission.

11. Procédé selon l'une quelconque des revendications 1 à 5, dans lequel, lorsque l'attribut lié au trafic comprend une latence,
la détermination, par le premier dispositif de transfert (20A) sur la base des informations sur les besoins en trafic et des informations d'attribut respectives des au moins deux chemins de transmission, d'un premier chemin de transmission qui répond à un besoin de trafic comprend :
la détermination, par le premier dispositif de transfert (20A) à partir des au moins deux chemins de transmission sur la base d'une quantité requise pour la latence, d'un chemin de transmission dont la valeur quantitative d'une latence n'est pas supérieure à la quantité requise pour la latence en tant que premier chemin de transmission.

12. Support de stockage lisible par ordinateur comprenant des instructions qui, lorsqu'elles sont exécutées par un ordinateur, amènent l'ordinateur à réaliser le procédé selon l'une quelconque des revendications 1 à 11.

13. Premier dispositif de transfert (20A) appliqué à un réseau de communication, dans lequel le premier dispositif de transfert (20A) est configuré pour réaliser le procédé selon l'une quelconque des revendications 1 à 11.

14. Système de routage comprenant :
un premier dispositif de transfert (20A) selon la revendication 13 ;
un second dispositif de transfert (20C) ; et
un dispositif de commande (10), dans lequel le dispositif de commande (10) est configuré pour :
déterminer une politique de routage de segment, dans lequel la politique de routage de segment comprend des informations d'attribut respectives d'au moins deux chemins de transmission comprises entre le premier dispositif de transfert (20A) et le second dispositif de transfert (20C), et les informations d'attribut de chacun des au moins deux chemins de transmission comprennent un attribut utilisé pour indiquer une capacité de transmission du chemin de transmission et une valeur quantitative correspondant à l'attribut ; et
envoyer la politique de routage de segment au premier dispositif de transfert.
